(19) Europäisches Patentamt
European Patent Office
Office européen des brevets

(11) EP 3 282 344 A1

(12) EUROPEAN PATENT APPLICATION
published in accordance with Art. 153(4) EPC

(43) Date of publication:
14.02.2018 Bulletin 2018/07

(51) Int Cl.:
G06F 3/041 (2006.01)     G06F 3/0485 (2013.01)

(21) Application number: 15888492.4

(86) International application number:
PCT/JP2015/061095

(22) Date of filing: 09.04.2015

(87) International publication number:
WO 2016/163000 (13.10.2016 Gazette 2016/41)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(71) Applicant: Fujitsu Limited
Kawasaki-shi, Kanagawa 211-8588 (JP)

(72) Inventors:
• ENDO, Yasuhiro
Kawasaki-shi
Kanagawa 212-8554 (JP)

• UCHIDA, Hiroki
Kawasaki-shi
Kanagawa 211-8588 (JP)
• NAGASAWA, Go
Kawasaki-shi
Kanagawa 211-8588 (JP)

(74) Representative: Haseltine Lake LLP
Lincoln House, 5th Floor
300 High Holborn
London WC1V 7JH (GB)

(54) DRIVE CONTROL DEVICE, ELECTRONIC EQUIPMENT, DRIVE CONTROL PROGRAM, AND DRIVE CONTROL METHOD

(57) Provided is a drive controlling apparatus that is user-friendly. A drive controlling apparatus, which drives a vibrating element of an electronic device including a display part, a top panel disposed on a display surface side of the display part and having a manipulation surface, a coordinate detector configured to detect coordinates of a manipulation input performed on the manipulation surface, and the vibrating element configured to generate a vibration at the manipulation surface, includes a storage part configured to store image data for a scrollable image, to be displayed on the display part, in association with edge position data that represents a position of an edge of the image, or with direction data that represents a scrollable direction of the image; and a drive controlling part configured to drive the vibrating element by using a driving signal for generating a natural vibration in an ultrasound frequency band at the manipulation surface, the drive controlling part being configured to drive the vibrating element according to a first pattern when the edge is not being displayed on the display part, and to drive the vibrating element according to a second pattern when the edge is being displayed on the display part, or being configured to drive the vibrating element according to a third pattern when the direction of the scrolling operation is the scrollable direction and to drive the vibrating element according to a fourth pattern when the direction of the scrolling operation is not the scrollable direction.

FIG.6

## Description

### Technical Field

The present invention relates to a drive controlling apparatus, an electronic device, a drive controlling program, and a drive controlling method.

### Background Art

Conventionally, there is a haptic effect enabled device that includes a haptic output device and a drive module configured to generate a periodic drive signal based on a touch input onto a surface and a tactile sensation at the surface. The haptic effect enabled device further includes an interface device that includes a drive circuit connected to the drive module and the haptic output device and configured to apply the periodic drive signal to the haptic output device (for example, see Patent Document 1).

### Related-Art Documents

### Patent Document

[Patent Document 1] Japanese Laid-open Patent Publication No. 2014-112357

### Summary of the Invention

### Problem to be Solved by the Invention

However, for example, when a user scrolls an image by a scrolling operation, the conventional haptic effect enabled device cannot notify a user, through a tactile sensation, of the presence of an edge of the image or of a difference between a scrollable direction and an un-scrollable direction. Therefore, it is not user-friendly.
Hence, an object is to provide a drive controlling apparatus, an electronic device, a drive controlling program, and a drive controlling method such that they are user-friendly.

### Means to Solve the Problem

According to an embodiment of the present invention, a drive controlling apparatus drives a vibrating element of an electronic device, the electronic device including a display part, a top panel disposed on a display surface side of the display part and having a manipulation surface, a coordinate detector configured to detect coordinates of a manipulation input performed on the manipulation surface, and the vibrating element, which is configured to generate a vibration at the manipulation surface. The drive controlling apparatus includes a storage part configured to store image data for a scrollable image, to be displayed on the display part, in association with edge position data that represents a position of an edge of the image, or with direction data that represents a scrollable direction of the image; a calculating part configured to calculate, based on the coordinates detected by the coordinate detector, an operation amount and an operation direction of a scrolling operation performed on the manipulation surface; and a drive controlling part configured to drive, upon the scrolling operation being performed on the top panel, the vibrating element by using a driving signal for generating a natural vibration in an ultrasound frequency band at the manipulation surface, the drive controlling part being configured to drive, based on the operation amount and the operation direction of the scrolling operation and based on the edge position data, the vibrating element according to a first pattern when the edge is not being displayed on the display part, and to drive the vibrating element according to a second pattern when the edge is being displayed on the display part, or being configured to drive, based on the operation amount and the operation direction of the scrolling operation and based on the direction data, the vibrating element according to a third pattern when the direction of the scrolling operation is the scrollable direction and to drive the vibrating element according to a fourth pattern when the direction of the scrolling operation is not the scrollable direction.

### Advantage of the Invention

It is possible to provide a drive controlling apparatus, an electronic device, a drive controlling program, and a drive controlling method such that they are user-friendly.

**Brief Description of the Drawings**

FIG. 1 is a perspective view illustrating an electronic device according to a first embodiment;
FIG. 2 is a plan view illustrating the electronic device according to the first embodiment;
FIG. 3 is a cross-sectional view of the electronic device taken along a line A-A of FIG. 2;
FIG. 4 is a diagram illustrating crests formed in parallel with a short side of a top panel included in a standing wave generated at the top panel by a natural vibration in an ultrasound frequency band;
FIG. 5 is a diagram illustrating cases where a kinetic friction force applied to a user's fingertip performing a manipulation input is varied by the natural vibration in the ultrasound frequency band generated at the top panel of the electronic device;
FIG. 6 is a diagram illustrating a configuration of the electronic device according to the first embodiment;
FIG. 7 is a diagram illustrating an example displayed on the electronic device of the first embodiment;
FIG. 8 is a diagram illustrating an entire scrollable image;
FIG. 9 is a diagram illustrating data stored in a memory;
FIG. 10 is a diagram illustrating data stored in the memory;
FIG. 11 is a diagram illustrating an example of an operation of the electronic device of the first embodiment;
FIG. 12 is a diagram illustrating an operating example of the electronic device of the first embodiment;
FIG. 13 is a diagram illustrating an operating example of the electronic device of the first embodiment;
FIG. 14 is a diagram illustrating an operating example of the electronic device of the first embodiment;
FIG. 15 is a diagram illustrating an operating example of the electronic device of the first embodiment;
FIG. 16 is a flowchart illustrating a process that is executed by a drive controlling part of the electronic device according to the first embodiment;
FIG. 17 is a diagram illustrating an operating example of the electronic device according to a second embodiment;
FIG. 18 is a diagram illustrating an operating example of the electronic device according to the second embodiment;
FIG. 19 is a diagram illustrating an operating example of the electronic device according to the second embodiment;
FIG. 20 is a diagram illustrating an operating example of the electronic device according to the second embodiment;
FIG. 21 is a flowchart illustrating a process that is executed by the drive controlling part of the electronic device according to the second embodiment;
FIG. 22 is a diagram illustrating a cross section of an electronic device according to a variation example of the first and second embodiments;
FIG. 23 is a diagram illustrating an electronic device of a variation example of the first and second embodiments;
FIG. 24 is a diagram illustrating a cross section of a touch pad of the electronic device of the variation example of the first and second embodiments; and
FIG. 25 is a plan view illustrating an operating state of an electronic device of a variation example of the first and second embodiments.

**[Mode for Carrying Out the Invention]**

Hereinafter, embodiments of the present invention will be described to which a drive controlling apparatus, an electronic device, a drive controlling program, and a drive controlling method are applied.

<First embodiment>

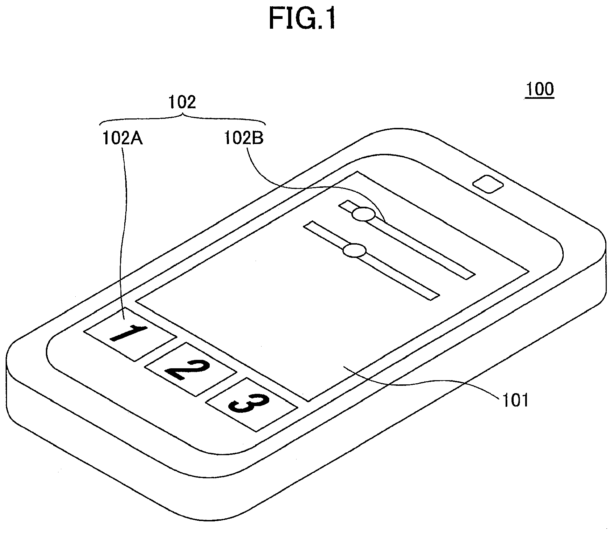

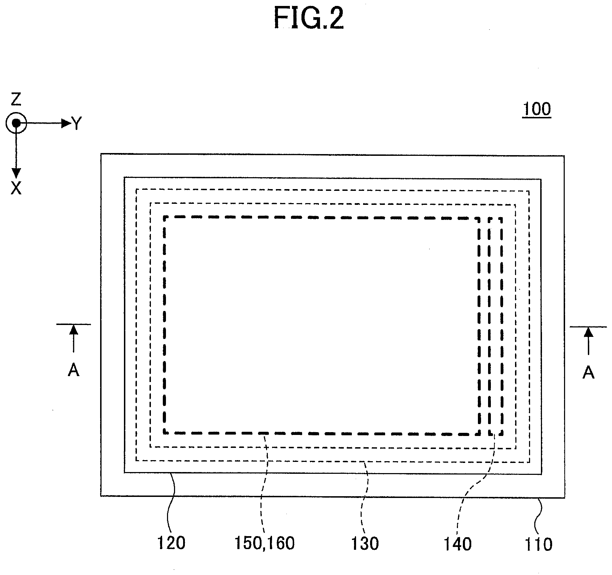

FIG. 1 is a perspective view illustrating an electronic device 100 according to a first embodiment.
For example, the electronic device 100 is a smartphone terminal device or a tablet computer that has a touch panel as a manipulation input part. The electronic device 100 may be any device as long as the device has a touch panel as a manipulation input part. Accordingly, the electronic device 100 may be a device such as a portable-type information terminal device, or an Automatic Teller Machine (ATM) placed at a specific location to be used, for example. Further, the electronic device 100 may be a device such as various types of controllers or navigation systems installed on a moving object or a vehicle such as an automobile or a motorcycle.
For a manipulation input part 101 of the electronic device 100, a display panel is disposed under a touch panel, and various buttons including a button 102A, a slider 102B, or the like (hereinafter referred to as Graphic User Interface (GUI) manipulation part(s) 102) are displayed on the display panel.
A user of the electronic device 100 ordinarily touches the manipulation input part 101 by his or her fingertip (s) in order to manipulate the GUI manipulation part 102.
Next, a detailed configuration of the electronic device 100 will be described with reference to FIG. 2.

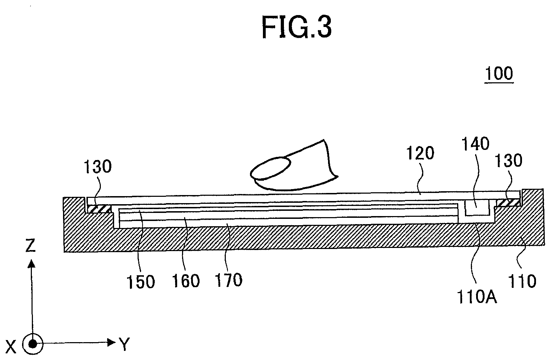

FIG. 2 is a plan view illustrating the electronic device 100 of the first embodiment. FIG. 3 is a diagram illustrating a cross-sectional view of the electronic device 100 taken along a line A-A of FIG. 2. It should be noted that an XYZ coordinate system that is an orthogonal coordinate system is defined as illustrated in FIGS. 2 and 3.

The electronic device 100 includes a housing 110, the top panel 120, a double-faced adhesive tape 130, a vibrating element 140, the touch panel 150, the display panel 160, and a substrate 170.

The housing 110 is made of a plastic, for example. As illustrated in FIG. 3, the substrate 170, the display panel 160 and the touch panel 150 are disposed in a recessed portion 110A of the housing 110, and the top panel 120 is bonded on the housing 110 by the double-faced adhesive tape 130.

The top panel 120 is a thin flat-plate member having a rectangular shape in plan view, and is made of transparent glass or a reinforced plastic such as polycarbonate. A surface of the top panel 120 (a positive side surface in the Z axis direction) is one example of a manipulation surface on which the user of the electronic device 100 performs a manipulation input.

The vibrating element 140 is bonded on a negative side surface of the top panel 120 in the Z axis direction, and the four sides in plan view of the top panel 120 are bonded on the housing 110 by the double-faced adhesive tape 130. It should be noted that the double-faced adhesive tape 130 is not necessarily a rectangular-ring-shaped member in plan view as illustrated in FIG. 3, as long as the double-faced adhesive tape 130 can bond the four sides of the top panel 120 to the housing 110.

The touch panel 150 is disposed on the negative side in the Z axis direction of the top panel 120. The top panel 120 is provided in order to protect the surface of the touch panel 150. It should be noted that another panel, protection film or the like may be provided on the surface of the top panel 120.

In a state in which the vibrating element 140 is bonded on the negative side surface of the top panel 120 in the Z axis direction, the top panel 120 is vibrated by driving the vibrating element 140. In the first embodiment, a standing wave is generated at the top panel 120 by causing the top panel 120 to vibrate at a natural vibration frequency of the top panel 120. However, because the vibrating element 140 is bonded on the top panel 120, it is preferable to determine the natural vibration frequency in consideration of a weight of the vibrating element 140 and the like, in practice.

The vibrating element 140 is bonded on the negative side surface of the top panel 120 in the Z axis direction, at a positive side in the Y axis direction, along the short side extending in the X axis direction. The vibrating element 140 may be any element as long as it can generate vibration in an ultrasound frequency band. A piezoelectric element such as a piezo element may be used as the vibrating element 140, for example.

The vibrating element 140 is driven in accordance with a driving signal output from a drive controlling part which will be described later. A frequency and an amplitude (intensity) of the vibration generated by the vibrating element 140 are set by the driving signal. Further, on/off of the vibrating element 140 is controlled in accordance with the driving signal.

It should be noted that the ultrasound frequency band is a frequency band that is higher than or equal to approximately 20 kHz, for example. According to the electronic device 100 of the first embodiment, the frequency at which the vibrating element 140 vibrates is equal to a number of vibrations per unit time (frequency) of the top panel 120. Accordingly, the vibrating element 140 is driven in accordance with the driving signal such that the vibrating element 140 vibrates at a number of natural vibrations per unit time (natural vibration frequency) of the top panel 120.

The touch panel 150 is disposed on (the positive side in the Z axis direction of) the display panel 160 and is disposed under (the negative side in the Z axis direction of) the top panel 120. The touch panel 150 is one example of a coordinate detector that detects a position (in the following, the position is referred to as a position of the manipulation input) at which the user of the electronic device 100 touches the top panel 120.

Various Graphic User Interface (GUI) buttons or the like (hereinafter referred to as GUI manipulation part(s)) are displayed on the display panel 160 located under the touch panel 150. Therefore, the user of the electronic device 100 ordinarily touches the top panel 120 by his or her fingertip (s) in order to manipulate the GUI manipulation part.

The touch panel 150 is any coordinate detector as long as it can detect the position of the manipulation input on the top panel 120 performed by the user. The touch panel 150 may be a capacitance type coordinate detector or a resistance film type coordinate detector, for example. Here, the embodiment in which the touch panel 150 is a capacitance type coordinate detector will be described. The capacitance type touch panel 150 can detect the manipulation input performed on the top panel 120 even if there is a clearance gap between the touch panel 150 and the top panel 120.

Also, although the top panel 120 is disposed on the input surface side of the touch panel 150 in the described embodiment, the top panel 120 may be integrated with the touch panel 150. In this case, the surface of the touch panel 150 is equal to the surface of the top panel 120 illustrated in FIGS. 2 and 3, and the surface of the touch panel 150 constitutes the manipulation surface. The top panel 120 illustrated in FIGS. 2 and 3 may be omitted. In this case, the surface of the touch panel 150 constitutes the manipulation surface. In this case, a member having the manipulation surface may be vibrated at a natural vibration frequency of the member.

In a case where the touch panel 150 is of capacitance type, the touch panel 150 may be disposed on the top panel 120. In this case also, the surface of the touch panel 150 constitutes the manipulation surface. Also, in the case where the touch panel 150 is of capacitance type, the top panel 120 illustrated in FIGS. 2 and 3 may be omitted. In this case also, the surface of the touch panel 150 constitutes the manipulation surface. In this case, a member having the manipulation surface may be vibrated at a natural vibration frequency of the member.

The display panel 160 may be a display part that can display an image. The display panel 160 may be a liquid crystal display panel, an organic Electroluminescence (EL) panel or the like, for example. Inside the recessed portion 110A of the housing 110, the display panel 160 is arranged on (the positive side in the Z axis direction of) the substrate 170 using a holder or the like whose illustration is omitted.

The display panel 160 is driven and controlled by a driver Integrated Circuit (IC), which will be described later, and displays a GUI manipulation part, an image, characters, symbols, graphics, and/or the like in accordance with an operating state of the electronic device 100.

The substrate 170 is disposed inside the recessed portion 110A of the housing 110. The display panel 160 and the touch panel 150 are disposed on the substrate 170. The display panel 160 and the touch panel 150 are fixed to the substrate 170 and the housing 110 by a holder or the like (not shown).

On the substrate 170, a drive controlling apparatus, which will be described later, and circuits and the like that are necessary for driving the electronic device 100 are mounted.

According to the electronic device 100 having the configuration as described above, when the user touches the top panel 120 with his or her fingertip and a movement of the user's fingertip is detected, the drive controlling part mounted on the substrate 170 drives the vibrating element 140 to vibrate the top panel 120 at a frequency in the ultrasound frequency band. This frequency in the ultrasound frequency band is a resonance frequency of a resonance system including the top panel 120 and the vibrating element 140 and generates a standing wave at the top panel 120.

The electronic device 100 generates the standing waves in the ultrasound frequency band to provide tactile sensations to the user through the top panel 120.

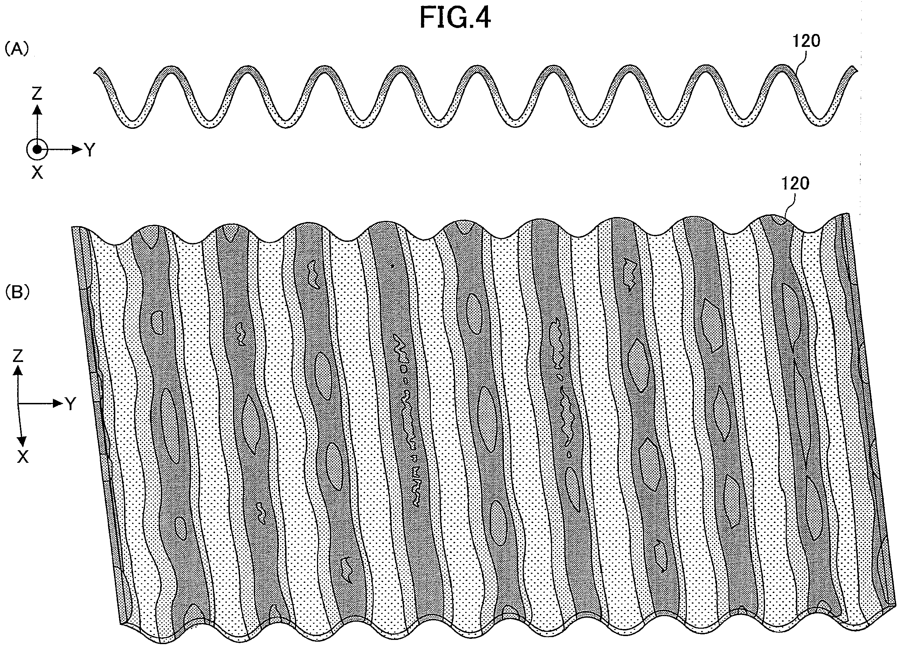

Next, a standing wave generated at the top panel 120 will be described with reference to FIG. 4.

FIG. 4 is a diagrams illustrating crests formed parallel with the short side of the top panel 120 included in the standing wave generated at the top panel 120 by the natural vibration in the ultrasound frequency band. (A) of FIG. 4 is a side view, and (B) of FIG. 4 is a perspective view. In (A) and (B) of FIG. 4, a XYZ coordinate system similar to that of FIGS. 2 and 3 is defined. It should be noted that in (A) and (B) of FIG. 4, the amplitude of the standing wave is overdrawn in an easy-to-understand manner. Also, the vibrating element 140 is omitted in (A) and (B) of FIG. 4.

The natural vibration frequency (the resonance frequency) f of the top panel 120 is represented by the following formulas (1) and (2) where E is the Young's modulus of the top panel 120, $\rho$ is the density of the top panel 120, $\delta$ is the Poisson's ratio of the top panel 120, 1 is the long side dimension of the top panel 120, t is the thickness of the top panel 120, and k is a periodic number of the standing wave along the direction of the long side of the top panel 120. Because the standing wave has the same waveform in every half cycle, the periodic number k takes values at intervals of 0.5, therefore at 0.5, 1, 1.5, 2 · · ·.

$$f = \frac{\pi k^2 t}{l^2} \sqrt{\frac{E}{3\rho(1-\delta^2)}} \qquad (1)$$

$$f = \alpha k^2 \qquad (2)$$

It should be noted that the coefficient $\alpha$ included in formula (2) corresponds to coefficients other than $k^2$ included in formula (1).

A waveform of the standing wave illustrated in (A) and (B) of FIG. 4 is a waveform of a case where the periodic number k is 10, for example. In a case where a sheet of Gorilla (registered trademark) glass of which the length 1 of the long side is 140 mm, the length of the short side is 80 mm, and the thickness t is 0.7 mm is used as the top panel 120, for example, the natural vibration frequency f is 33.5 kHz when the periodic number k is 10. In this case, a driving signal whose frequency is 33.5 kHz may be used.

The top panel 120 is a planar member. When the vibrating element 140 (see FIGS. 2 and 3) is driven to generate the natural vibration in the ultrasound frequency band at the top panel 120, the top panel 120 deflects as illustrated in (A) and (B) of FIG. 4. As a result, the standing wave is generated in the surface of the top panel 120.

In the described embodiment, the single vibrating element 140 is bonded, on the negative side surface of the top panel 120 in the Z axis direction, at the location along the short side, which extends in the X axis direction, at the positive side in the Y axis direction. However, the electronic device 100 may use two vibrating elements 140. In a case where the electronic device 100 uses the two vibrating elements 140, another vibrating element 140 may be bonded, on the negative side surface of the top panel 120 in the Z axis direction, at a location along the short side, which extends in the X axis direction, at a negative side in the Y axis direction. In this case, the two vibrating elements 140 may be axisymmetrically disposed with respect to a center line of the top panel 120 parallel to the two short sides of the top panel 120.

Further, in a case where the electronic device 100 drives two vibrating elements 140, the two vibrating elements 140 may be driven in the same phase, if the periodic number k is an integer number. If the periodic number k is a decimal number (which is a number having an integer part and a decimal part), the two vibrating elements 140 may be driven in opposite phases.

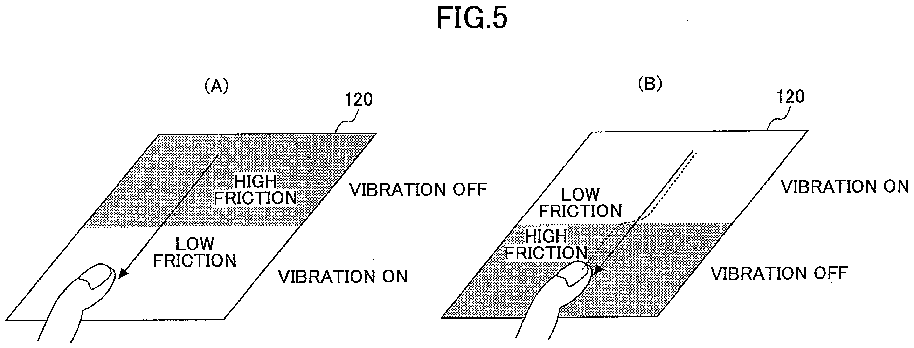

Next, the natural vibration in the ultrasound frequency band generated at the top panel 120 of the electronic device 100 will be described with reference to FIG. 5.

FIG. 5 is a diagram illustrating cases where a kinetic friction force applied to a user's fingertip performing a manipulation input is varied by the natural vibration in the ultrasound frequency band generated at the top panel 120 of the electronic device 100. In (A) and (B) of FIG. 5, while touching the top panel 120 with the user's fingertip, the user performs the manipulation input by moving his or her fingertip along the arrow from a far side to a near side of the top panel 120. It should be noted that the vibration is turned on/off by turning on/off the vibrating element 140 (see FIGS. 2 and 3).

In (A) and (B) of FIG. 5, areas which the user's fingertip touches while the vibration is off are indicated in grey, with respect to the depth direction of the top panel 120. Areas which the user's finger touches while the vibration is on are indicated in white, with respect to the depth direction of the top panel 120.

As illustrated in (A) and (B) of FIG. 4, the natural vibration in the ultrasound frequency band occurs in the entire top panel 120. (A) and (B) of FIG. 5 illustrate operation patterns in which on/off of the vibration is switched while the user's finger is tracing the top panel 120 from the far side to the near side.

Accordingly, in (A) and (B) of FIG. 5, the areas which the user's finger touches while the vibration is off are indicated in grey, and the areas which the user's finger touches while the vibration is on are indicated in white.

In the operation pattern illustrated in (A) of FIG. 5, the vibration is off when the user's finger is located on the far side of the top panel 120, and the vibration is turned on in the process of moving the user's finger toward the near side.

Conversely, in the operation pattern illustrated in (B) of FIG. 5, the vibration is on when the user's finger is located on the far side of the top panel 120, and the vibration is turned off in the process of moving the user's finger toward the near side.

Here, when the natural vibration in the ultrasound frequency band is generated at the top panel 120, a layer of air is interposed between the surface of the top panel 120 and the user's finger. The layer of air is provided by a squeeze effect. Thus, a kinetic friction coefficient on the surface of the top panel 120 is decreased when the user traces the surface with the user's finger.

Accordingly, in the grey area located on the far side of the top panel 120 illustrated in (A) of FIG. 5, the kinetic friction force applied to the user's fingertip increases. In the white area located on the near side of the top panel 120, the kinetic friction force applied to the user's fingertip decreases.

Therefore, a user who is performing the manipulation input on the top panel 120 as illustrated in (A) of FIG. 5 senses a decrease of the kinetic friction force applied to the user's fingertip when the vibration is turned on. As a result, the user senses a slippery or smooth touch (texture) with the user's fingertip. In this case, the user senses as if a concave portion were present on the surface of the top panel 120, when the surface of the top panel 120 becomes smoother and the kinetic friction force decreases.

Conversely, in the white area located on the far side of the top panel 120 illustrated in (B) of FIG. 5, the kinetic friction force applied to the user's fingertip decreases. In the grey area located on the near side of the top panel 120, the kinetic friction force applied to the user's fingertip increases.

Therefore, a user who is performing the manipulation input on the top panel 120 as illustrated in (B) of FIG. 5 senses an increase of the kinetic friction force applied to the user's fingertip when the vibration is turned off. As a result, the user senses a grippy or scratchy touch (texture) with the user's fingertip. In this case, the user senses as if a convex portion were present on the surface of the top panel 120, when the user's fingertip becomes grippy and the kinetic friction force increases.

As described above, the user can feel a concavity and convexity with his or her fingertip in the cases as illustrated in (A) and (B) of FIG. 5. For example, "The Printed-matter Typecasting Method for Haptic Feel Design and Sticky-band Illusion" (the Collection of papers of the 11th SICE system integration division annual conference (SI2010, Sendai)_174-177, 2010-12) discloses that a person can sense a concavity or a convexity. "Fishbone Tactile Illusion" (Collection of papers of the 10th Congress of the Virtual Reality Society of Japan (September, 2005)) also discloses that a person can sense a concavity or a convexity.

Although a variation of the kinetic friction force when the vibration is switched on/off is described above, a variation of the kinetic friction force is similarly obtained when the amplitude (intensity) of the vibrating element 140 is varied.

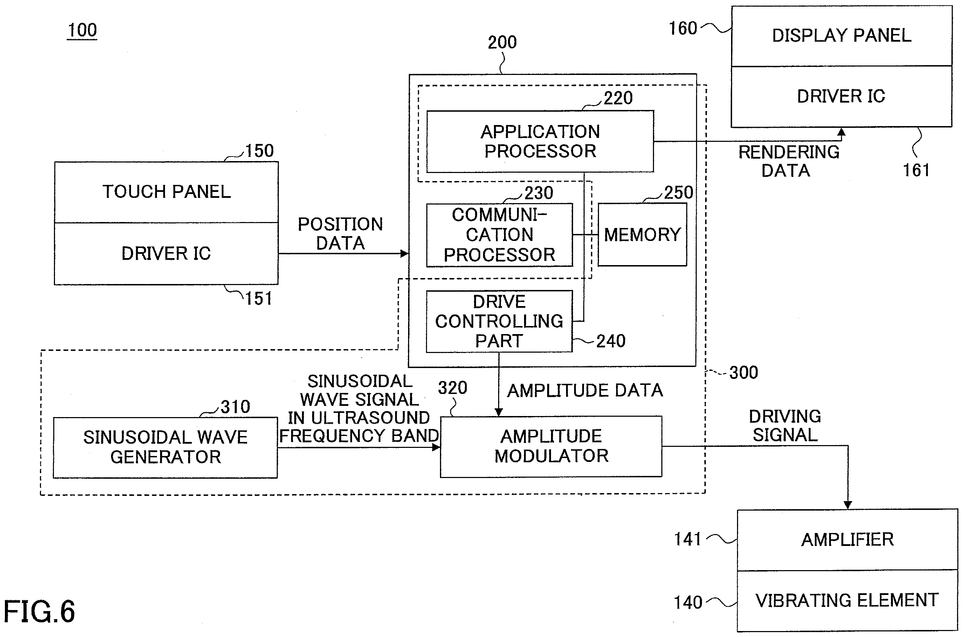

Next, a configuration of the electronic device 100 of the first embodiment will be described with reference to FIG. 6.

FIG. 6 is a diagram illustrating the configuration of the electronic device 100 of the first embodiment.

The electronic device 100 includes the vibrating element 140, an amplifier 141, the touch panel 150, a driver Integrated Circuit (IC) 151, the display panel 160, a driver IC 161, a controlling part 200, a sinusoidal wave generator 310, and an amplitude modulator 320.

The controlling part 200 includes an application processor 220, a communication processor 230 a drive controlling part 240, and a memory 250. The controlling part 200 is realized by an IC chip, for example.

The drive controlling part 240, the memory 250, the application processor 220, the sinusoidal wave generator 310, and the amplitude modulator 320 constitute a drive controlling apparatus 300. Note that the drive controlling apparatus 300 may include a scrolling degree calculating part within the application processor 220. Within the application processor 220, the scrolling degree calculating part is a part that calculates an operation amount and an operation direction of a scrolling operation.

Note that although the application processor 220, the communication processor 230, the drive controlling part 240, and the memory 250 are realized by one controlling part 200 in the embodiment described here, the drive controlling part 240 may be disposed outside the controlling part 200 as another IC chip or processor. In this case, data that is necessary for drive control of the drive controlling part 240 among data stored in the memory 250, may be stored in a memory other than the memory 250 and may be provided inside the drive controlling apparatus 300.

In FIG. 6, the housing 110, the top panel 120, the double-faced adhesive tape 130, and the substrate 170 (see FIG. 2) are omitted. Here, the amplifier 141, the driver IC 151, the driver IC 161, the drive controlling part 240, the memory 250, the sinusoidal wave generator 310, and the amplitude modulator 320 will be described.

The amplifier 141 is disposed between the drive controlling apparatus 300 and the vibrating element 140. The amplifier 141 amplifies the driving signal output from the drive controlling apparatus 300 to drive the vibrating element 140.

The driver IC 151 is coupled to the touch panel 150. The driver IC 151 detects position data that represents a position on the touch panel 150 at which a manipulation input is performed, and outputs the position data to the controlling part 200. As a result, the position data is input to the application processor 220 and the drive controlling part 240. Note that inputting the position data to the drive controlling part 240 is equivalent to inputting the position data to the drive controlling apparatus 300.

The driver IC 161 is coupled to the display panel 160. The driver IC 161 inputs rendering data, output from the drive controlling apparatus 300, to the display panel 160 and causes the display panel 160 to display an image that is based on the rendering data. In this way, a GUI manipulation part, an image, or the like based on the rendering data is displayed on the display panel 160.

The application processor 220 performs processes for executing various applications of the electronic device 100. Further, the application processor 220 calculates an operation amount and an operation direction of a scrolling operation based on a change of the position data detected by the touch panel 150.

Based on the data that represents the operation amount and the operation direction of the detected scrolling operation, upon the scrolling operation being performed on the top panel 120, the application processor 220 scrolls the image displayed on the display panel 160. When the application processor 220 scrolls the image displayed on the display panel 160, the image may be scrolled by inertia of the scrolling operation on the top panel 120.

Further, the application processor 220 inputs the data, which represents the operation amount and the operation direction of the detected scrolling operation, to the drive controlling part 240. The application processor 220 is an example of a scrolling degree calculating part. Note that the drive controlling part 240 may calculate an operation amount and an operation direction of a scrolling operation based on a change of the position data detected by the touch panel 150.

The communication processor 230 executes necessary processes such that the electronic device 100 performs communications such as 3G (Generation), 4G (Generation), LTE (Long Term Evolution), and WiFi.

The drive controlling part 240 outputs amplitude data to the amplitude modulator 320 in a case where two predetermined conditions are satisfied. The amplitude data is .data that represents amplitude value(s) for adjusting an intensity of a driving signal used to drive the vibrating element 140. The amplitude value (s) is set in accordance with a degree of time change of the position data. Here, a speed of the user's fingertip moving along the surface of the top panel 120 is used as the degree of time change of the position data. The drive controlling part 240 may calculate the moving speed of the user's fingertip based on a degree of time change of the position data input from the driver IC 151.

For example, in order to make a tactile sensation, to be sensed by the user from the user's fingertip, constant regardless of the moving speed of the user's fingertip, the drive controlling apparatus 300 of the first embodiment decreases the amplitude value as the moving speed increases, and increases the amplitude value as the moving speed decreases.

First data that represents a relationship between the amplitude data, representing such amplitude value(s), and the moving speed is stored in the memory 250.

It should be noted that although the amplitude value in accordance with the moving speed is set by using the first data in the described embodiment, the amplitude value A may be calculated using the following formula (3). The amplitude value A calculated by the formula (3) decreases as the moving speed increases, and increases as the moving speed decreases.

$$A = A_0 / \sqrt{|V|/a} \qquad (3)$$

Here, "Ao" is a reference value of the amplitude, "V" represents the moving speed of the fingertip and "a" is a predetermined constant value. In a case where the amplitude value A is calculated by using the formula (3), data representing the formula (3) and data, representing the reference value $A_0$ and the predetermined constant value a, may be stored in the memory 250.

The drive controlling apparatus 300 of the first embodiment causes the top panel 120 to vibrate in order to vary the kinetic friction force applied to the user's fingertip when the user's fingertip moves along the surface of the top panel 120. Because the kinetic friction force occurs when the user's fingertip is in motion, the drive controlling part 240 causes the vibrating element 140 to vibrate when the moving speed becomes greater than or equal to a predetermined threshold speed. The first predetermined condition is that the moving speed is greater than or equal to the predetermined threshold speed.

Accordingly, the amplitude value represented by the amplitude data output from the drive controlling part 240 is zero in a case where the moving speed is less than the predetermined threshold speed. The amplitude value is set to be a predetermined amplitude value corresponding to the moving speed in a case where the moving speed becomes greater than or equal to the predetermined threshold speed. When the moving speed is greater than or equal to the predetermined threshold speed, the amplitude value is set to be smaller as the moving speed increases, and the amplitude value is set to be larger as the moving speed decreases.

The drive controlling apparatus 300 of the first embodiment outputs the amplitude data to the amplitude modulator 320 in a case where the position of the user's fingertip performing the manipulation input is within a predetermined area in which a vibration is to be generated. The second predetermined condition is that the position of the user's fingertip performing the manipulation input is within the predetermined area in which the vibration is to be generated.

It is determined whether the position of the user's fingertip performing the manipulation input is within the predetermined area, in which a vibration is to be generated, based on whether the position of the user's fingertip performing the manipulation input is located inside the predetermined area in which the vibration is to be generated.

Here, a position of a GUI manipulation part to be displayed on the display panel 160, of a area for displaying an image, of a area representing an entire page, or the like on the display panel 160 is specified by area data that represents the area. The area data is provided, in all applications, with respect to all GUI manipulation parts to be displayed on the display panel 160, the area for displaying an image, or the area representing the entire page.

Accordingly, when the drive controlling apparatus 300 determines, as the second predetermined condition, whether the position of the user's fingertip performing the manipulation input is within the predetermined area in which a vibration is to be generated, a type of the application(s) activated by the electronic device 100 is of concern to the determination. This is because contents displayed on the display panel 160 differ depending on the types of the applications.

Further, this is because types of the manipulation inputs of moving the user's fingertip(s) touching the surface of the top panel 120 differ depending on the types of the applications. For example, there is a flick operation as a type of a manipulation input performed by moving the user's fingertip(s) touching the surface of the top panel 120 when manipulating a GUI manipulation part. The flick operation is an operation performed by moving the user's fingertip for a relatively short distance to flick (snap) the surface of the top panel 120.

In a case where the user turns over a page, a swipe operation is performed, for example. The swipe operation is an operation performed by moving the user's fingertip for a relatively long distance to swipe the surface of the top panel 120. The swipe operation is performed when the user flips a page or a photo, for example. Further, in a case of sliding the slider of the GUI manipulation part (see the slider 102B in FIG. 1), a drag operation is performed to drag the slider.

The manipulation inputs that are performed by moving the user's fingertip(s) touching the surface of the top panel 120, such as the flick operation, the swipe operation and the drag operation that are introduced as examples, are used differently depending on types of displayed contents by the applications. Accordingly, the type of the application executed by the electronic device 100 is related to determining whether the position of the user's fingertip performing the manipulation input is within the predetermined area in which a vibration is to be generated.

The drive controlling part 240 uses the area data to determine whether the position represented by the position data input from the driver IC 151 is within the predetermined area in which a vibration is to be generated.

The memory 250 stores the second data that associates data, which represents the types of the applications, with the area data, which represents the areas of the GUI input parts or the like in which a manipulation input is to be performed, and with pattern data, which represents vibration patterns.

The drive controlling part 240 performs the following processes in order to interpolate a positional change of the position of the user's fingertip during the required duration of time from a point of time when the position data is input to the drive controlling apparatus 300 from the driver IC 151 to a point of time when the driving signal is calculated based on the position data.

The drive controlling apparatus 300 performs calculation for each predetermined control cycle. Similarly, the drive controlling part 240 also performs calculation for each predetermined control cycle. Hence, when the required duration of time, from the point of time when position data is input from the driver IC 151 to the drive controlling apparatus 300 to the point of time when the driving signal is calculated by the drive controlling part 240 based on the position data, is $\Delta t$, the required duration $\Delta t$ of time is equal to the control cycle.

Here, the moving speed of the user's fingertip can be calculated as a velocity of a vector that has a starting point (x1, y1) represented by the position data input to the drive controlling apparatus 300 from the driver IC 151 and a terminal point (x2, y2) corresponding to the position of the user's fingertip after an elapse of the required duration $\Delta t$ of time.

The drive controlling part 240 estimates coordinates (x3, y3) after the elapse of the required duration $\Delta t$ of time by calculating a vector having a starting point (x2, y2) represented by the position data input to the drive controlling apparatus 300 from the driver IC 151 and a terminal point (x3, y3) corresponding to the position of the user's fingertip after the elapse of the required duration $\Delta t$ of time.

The electronic device 100 of the first embodiment interpolates the positional change of the position of the user's fingertip having arisen in the required duration $\Delta t$ of time by estimating coordinates after the elapse of the required duration $\Delta t$ of time as described above.

The drive controlling part 240 performs such calculation of estimating the coordinates after the elapse of the required duration $\Delta t$ of time. The drive controlling part 240 determines whether the estimated coordinates are located inside the predetermined area in which a vibration is to be generated and generates the vibration when the estimated coordinates are located inside the predetermined area. Accordingly, the second predetermined condition is that the estimated coordinates are located inside the predetermined area in which a vibration is to be generated.

As described above, the two predetermined conditions required for the drive controlling part 240 to output the amplitude data to the amplitude modulator 320 are that the moving speed of the user's fingertip is greater than or equal to the predetermined threshold speed and that the estimated coordinates are located in the predetermined area in which a vibration is to be generated.

In a case where the moving speed of the user's fingertip is greater than or equal to the predetermined threshold speed and the estimated coordinates are located inside the predetermined area in which the vibration is to be generated, the drive controlling part 240 reads amplitude data that represents an amplitude value corresponding to the moving speed from the memory to output the amplitude data to the amplitude modulator 320.

The memory 250 stores the first data that represents a relationship between the amplitude data representing amplitude values and the moving speeds, and stores the second data that associates data, which represents the types of the applications, with the area data, which represents the areas of the GUI input parts or the like in which a manipulation input is to be performed, and with the pattern data, which represents vibration patterns.

Further, the memory 250 stores programs and data necessary for the application processor 220 to execute the applications, and stores programs and data necessary for communicating processes of the communication processor 230, and the like.

The sinusoidal wave generator 310 generates sinusoidal waves required for generating the driving signal that is for vibrating the top panel 120 at the natural vibration frequency. For example, in a case of causing the top panel 120 to vibrate at the natural vibration frequency f of 33.5, kHz a frequency of the sinusoidal waves becomes 33.5 kHz. The sinusoidal wave generator 310 inputs a sinusoidal wave signal in the ultrasound frequency band to the amplitude modulator 320.

Using the amplitude data input from the drive controlling part 240, the amplitude modulator 320 modulates an amplitude of the sinusoidal wave signal, input from the sinusoidal wave generator 310, to generate a driving signal. The amplitude modulator 320 modulates only the amplitude of the sinusoidal wave signal in the ultrasound frequency band, input from the sinusoidal wave generator 310, to generate the driving signal without modulating a frequency and a phase of the sinusoidal wave signal.

Hence, the driving signal output from the amplitude modulator 320 is a sinusoidal wave signal in the ultrasound frequency band obtained by modulating only the amplitude of the sinusoidal wave signal in the ultrasound frequency band input from the sinusoidal wave generator 310. It should be noted that in a case where the amplitude data is zero, the amplitude of the driving signal is zero. This is the same as the amplitude modulator 320 not outputting the driving signal.

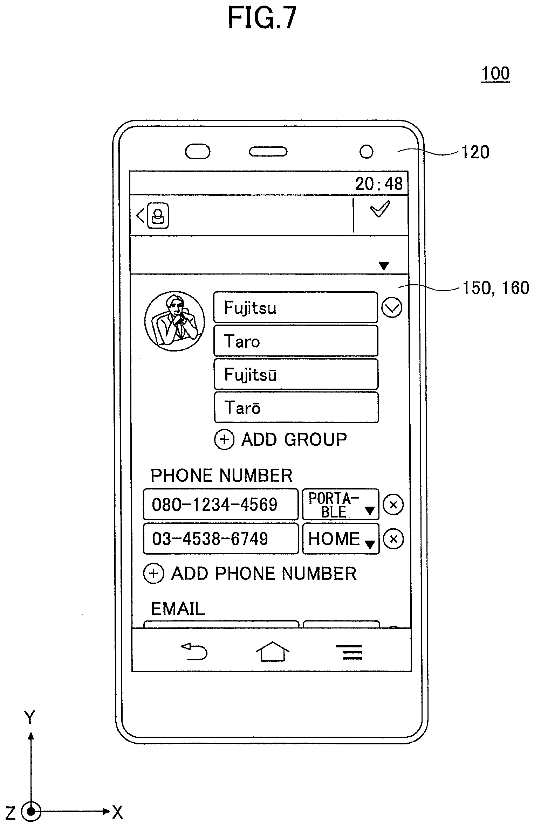

Next, data stored in the memory 250 and scrollable image data will be described with reference to FIG. 7 to FIG. 11.

FIG. 7 is a diagram illustrating an example displayed on the electronic device 100 of the first embodiment. Note that an XYZ coordinate system that is common with FIG. 2 to FIG. 4 is defined in FIG. 7.

In FIG. 7, phone numbers and the like of Fujitsu Taro (Fujitsu Tarō) are displayed in an edit screen of contact information.

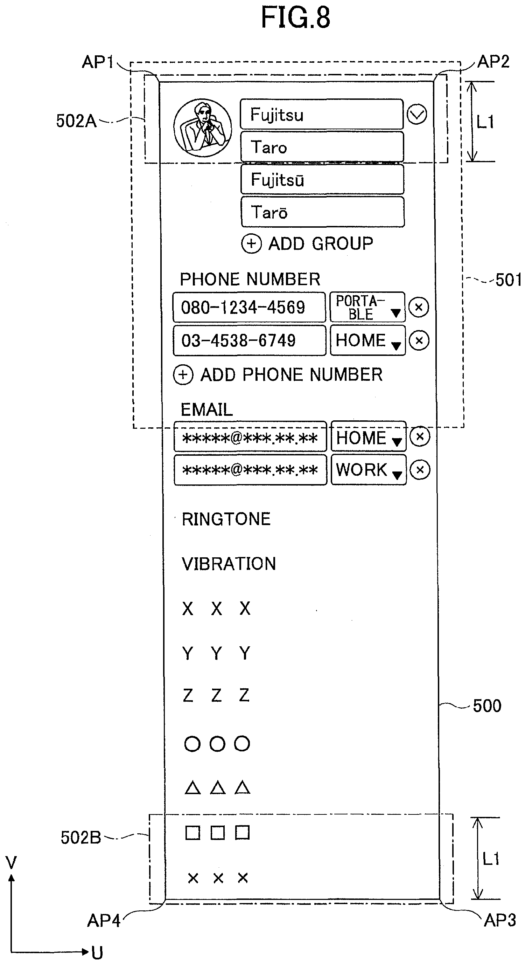

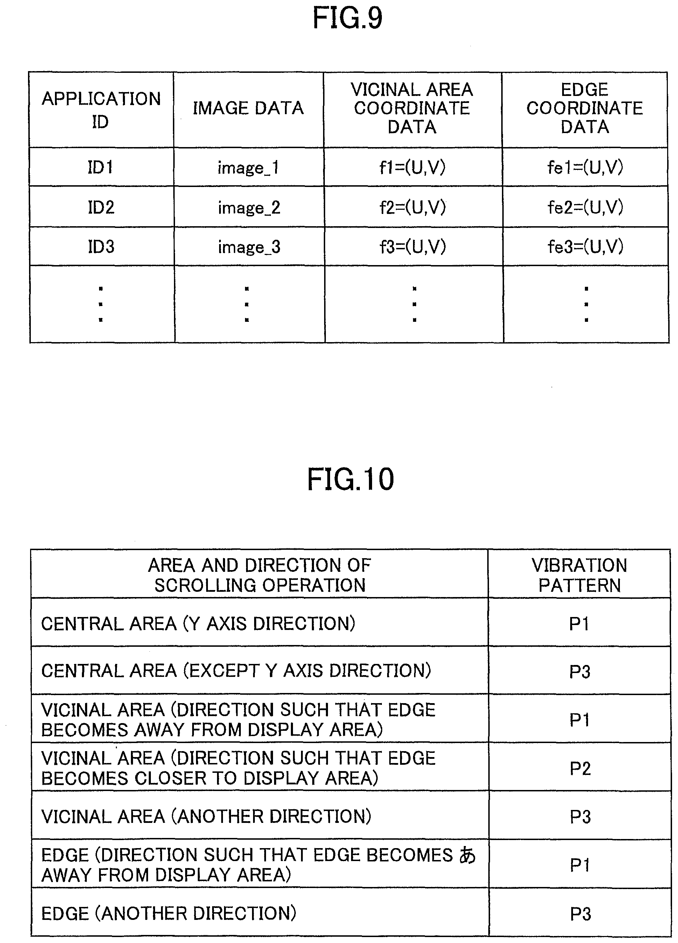

FIG. 8 is a diagram illustrating the entire scrollable image. FIG. 9 and FIG. 10 are diagrams illustrating the data stored in the memory 250.

FIG. 8 illustrates a scrollable image 500. The scrollable image 500 is represented by image data in which only a part 501 is displayed on the display panel 160 (see FIG. 7) and an area to be displayed on the display panel 160 can be selected by a user performing a scrolling operation.

The part 501 of the image 500 illustrated in FIG. 8 is displayed on the display panel 160 illustrated in FIG. 7. Within the entire image 500, the part 501 of the image 500 can be treated as a display area to be displayed on the display panel 160. Coordinates of the display area (part 501) are represented by coordinate values of a UV coordinate system.

The image 500 is image data of which the entirety has a rectangular area, and represents the edit screen of contact information. The image 500 illustrated in FIG. 8 is a screen for inputting a name, phone number(s), an e-mail address, a ringtone, a vibration, and other individual information. The image 500 illustrated in FIG. 8 displays the phone numbers, the e-mail address, and the like of Fujitsu Taro (Fujitsu Tarō). Here, XXX, YYY, ZZZ, ○○○, △△△, □□□, and ×××  illustrated in FIG. 8 represent other individual information.

The image 500 includes four apexes API, AP2, AP3, and AP4. Coordinates of the four apexes API, AP2, AP3, and AP4 represent the entire area of the scrollable image. Further, the formulas that represent four straight lines connecting the four apexes API, AP2, AP3, and AP4 are the four sides of the scrollable image, and represent coordinates of the edges.

Two-dimensional coordinates of the image 500 are defined by the UV coordinate system. The UV coordinate system defines coordinates that represent a position of a displayed content and the coordinates of the image 500 illustrated in FIG. 8, and the U axis is a direction that is the same direction as the X axis and the V axis is a direction that is the same as the Y axis. The U axis and the V axis are respectively associated with the X axis and the Y axis.

The area displayable on the display panel 160 is the part 501 of the image 500. Upon a scrolling operation being performed on the top panel 120 in the Y axis direction to scroll the image 500 in the V axis direction, a position of the part 501 moves in the V axis direction. Moving the position of the part 501 in the V axis direction means moving the display area, within the image 500, displayed on the display panel 160 in the V axis direction.

Here, a width of the part 501 in the U axis direction is equal to a width of the image 500 in the U axis direction. Thus, the image 500 displayed as an example here cannot be scrolled in the U axis direction but can be scrolled only in the V axis direction.

That is, the image 500 is not scrolled even when a scrolling operation in the X axis direction is performed on the top panel 120, and the image 500 is scrolled in the V axis direction in a case where a scrolling operation in the Y axis direction is performed on the top panel 120.

Note that it is determined as to whether the scrolling operation performed on the top panel 120 is in the Y axis direction based on whether the operation is within the range of a predetermined angle from the extending direction of the Y axis. For example, the predetermined angle may be set to be approximately ± 10 degrees.

In FIG. 8, vicinal areas 502A and 502B are set, for example. The vicinal area 502A is an area, at a positive side in the Y axis direction, that includes the edge AP1-AP2 connecting the apexes AP1 and AP2. The width of the vicinal area 502A in the X axis direction is equal to the length of the edge AP1-AP2. The vicinal area 502A has an area having a predetermined length L1 from the edge AP1-AP2 towards the negative side in the Y axis direction.

The vicinal area 502B is an area, at a negative side in the Y axis direction, that includes the edge AP3-AP4 connecting the apexes AP3 and AP4. The width of the vicinal area 502B in the X axis direction is equal to the length of the edge AP3-AP4. The vicinal area 502B has an area having the predetermined length L1 from the edge AP3-AP4 towards the positive side in the Y axis direction. The vicinal area 502A and the vicinal area 502B are respectively an area at the edge AP1-AP2 side and an area at the edge AP3-AP4 side within the entire area of the image 500.

Data illustrated in FIG. 9 is data that associates application IDs (Identifications) with image data, vicinal area coordinate data, and edge coordinate data.

The application IDs are data that represent types of applications, and FIG. 9 illustrates ID1, ID2, and ID3. The applications represented by the application IDs include all applications usable in a device such as a smartphone terminal device, a tablet computer, a touch panel device, or an in-vehicle device, and include a mode for editing an e-mail.

The image data is image data for scrollable images, and image_1, image_2, and image_3 are illustrated. The image data is data that represents various images to be displayed on the display panel 160 by activating various applications.

The vicinal area coordinate data is data that represents coordinates of vicinal areas close to the four sides of image data for the scrollable images, and formulas f1 to f3 are illustrated. The formulas f1 to f3 are data that represent ranges of coordinates at which the vicinal ranges are present in a functional form, and are defined by the UV coordinate system that represents two-dimensional coordinates of the image 500.

The U axis and the V axis are respectively associated with the X axis and the Y axis.

The edge coordinate data is data that represents four edges of the image data for the scrollable images, and represents formulas fe1 to fe3. Similar to the formulas f1 to f3 representing the vicinal area coordinate data, the formulas fel to fe3 are defined in the UV coordinate system.

Data illustrated in FIG. 10 is data that represents vibration patterns for respective areas. FIG. 10 illustrates vibration patterns P1 to P3 with respect to cases of three parts that are a central area, a vicinal area, and an edge being displayed on the display panel 160.

The central area is an area obtained by removing the vicinal areas from the entire area of the scrollable image.

Within the entire area of the scrollable image, the vicinal areas are areas located within a predetermined range close to the four sides. The entire area of the scrollable image is obtained by combining the vicinal areas and the central area. The vicinal areas include the four edges (four sides).

The edges are the four sides of the scrollable image, and coordinates of the edges represent the four sides of the scrollable image. The edges are included in the vicinal areas.

When a scrolling operation is performed on the top panel 120 in the Y axis direction while the central area is being displayed on the display panel 160, the vibrating element 140 is driven according to the vibration pattern P1. The vibration pattern P1 is a vibration pattern for generating a natural vibration in the ultrasound frequency band at a constant amplitude.

When a scrolling operation is performed on the top panel 120 in a direction that is not the Y axis direction while the central area is being displayed on the display panel 160, the vibrating element 140 is driven according to the vibration pattern P3. The vibration pattern P3 is a vibration pattern for setting the amplitude of the natural vibration in the ultrasound frequency band to be zero so as not to drive the vibrating element 140.

When a scrolling operation is performed in a direction such that the edge becomes away (out) from the display area in the Y axis direction while the vicinal area is being displayed on the display panel 160, the vibrating element 140 is driven according to the vibration pattern P1. The vibration pattern P1 is a vibration pattern for generating the natural vibration in the ultrasound frequency band at the constant amplitude.

The scrolling operation being performed in the direction such that the edge becomes away (out) from the display area in the Y axis direction means, for example, a scrolling operation being performed in the Y axis direction such that the state in which the edge is displayed on the display area is changed to be the state in which the central area is displayed on the display area.

While the vicinal area is 'being displayed on the display panel 160, when a scrolling operation is performed in a direction such that the edge becomes closer to the display area in the Y axis direction or the edge becomes closer to the center of the display area, the vibrating element 140 is driven according to the vibration pattern P2. The vibration pattern P2 is a vibration pattern intermittently generated by the natural vibration in the ultrasound frequency band. This is for reporting, through a tactile sensation at the user's fingertip, the approaching of the end of the scrollable image 500.

When a scrolling operation is performed on the top panel 120 in a direction that is not the Y axis direction while the vicinal area is being displayed on the display panel 160, the vibrating element 140 is driven according to the vibration pattern P3. The vibration pattern P3 is a vibration pattern for setting the amplitude of the natural vibration in the ultrasound frequency band to be zero so as not to drive the vibrating element 140.

Because the scrolling operation is performed on the top panel 120 in the Y axis direction, a direction that is not the Y axis direction means an un-scrollable direction.

When a scrolling operation is performed in a direction such that the edge becomes away from the display area in the Y axis direction while the edge is being displayed on the display panel 160, the vibrating element 140 is driven according to the vibration pattern P1. The vibration pattern P1 is a vibration pattern for generating the natural vibration in the ultrasound frequency band at the constant amplitude.

When a scrolling operation is performed on the top panel 120 in a direction that is not the direction described above while the edge is being displayed on the display panel 160, the vibrating element 140 is driven according to the vibration pattern P3. "The direction that is not the direction described above" means any direction that is not the direction such that the edge becomes away from the display area in the Y axis direction.

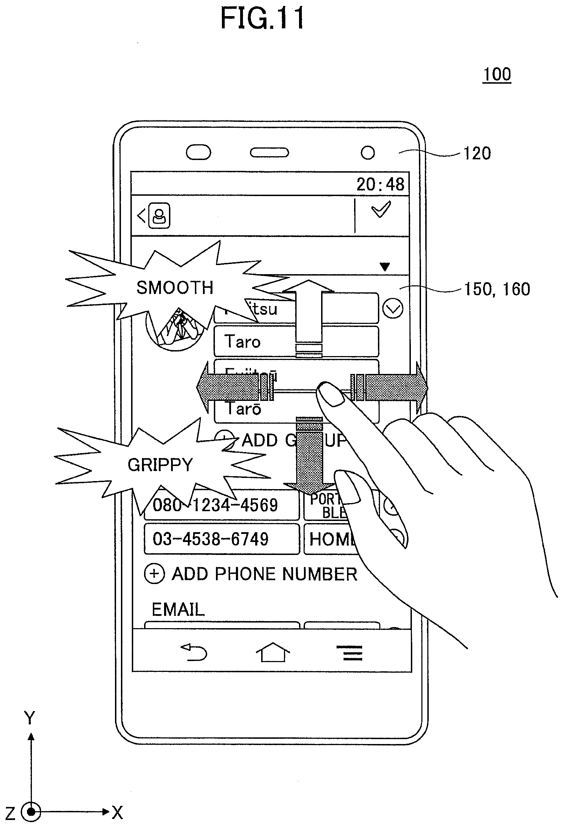

Next, an example of an operation of the electronic device 100 will be described with reference to FIG. 11.

FIG. 11 is a diagram illustrating an example of an operation of the electronic device 100 of the first embodiment. In FIG. 11, phone numbers and the like of Fujitsu Taro (Fujitsu Taro) in the edit screen of contact information are displayed on the display panel 160 similar to FIG. 7.

Here, when the user performs a scrolling operation in the positive side in the Y axis direction as illustrated by the white arrow, in order to display a part below the part 501 of the image 500 on the display panel 160, the electronic device 100 drives the vibrating element 140 to generate the natural vibration in the ultrasound frequency band at the top panel 120 because this manipulation direction is a direction in which the image 500 can be scrolled. As a result, a smooth tactile sensation with a low kinetic friction force is provided to the user's fingertip. This tactile sensation is provided by the squeeze effect.

When the user performs a scrolling operation in the negative side in the Y axis direction, the positive side in the X axis direction and the negative side in the X axis direction, the electronic device 100 does not drive the vibrating element 140 and does not generate the natural vibration in the ultrasound frequency band at the top panel 120 because the image 500 cannot be scrolled in these directions. As a result, a grippy tactile sensation with a high kinetic friction force is provided to the user's fingertip.

In this way, the electronic device 100 provides different tactile sensations to the user based on the scrollable direction and the un-scrollable direction such that the user can determine, from the tactile sensation obtained from the user's fingertip, whether it is a direction in which a scrolling operation can be performed.

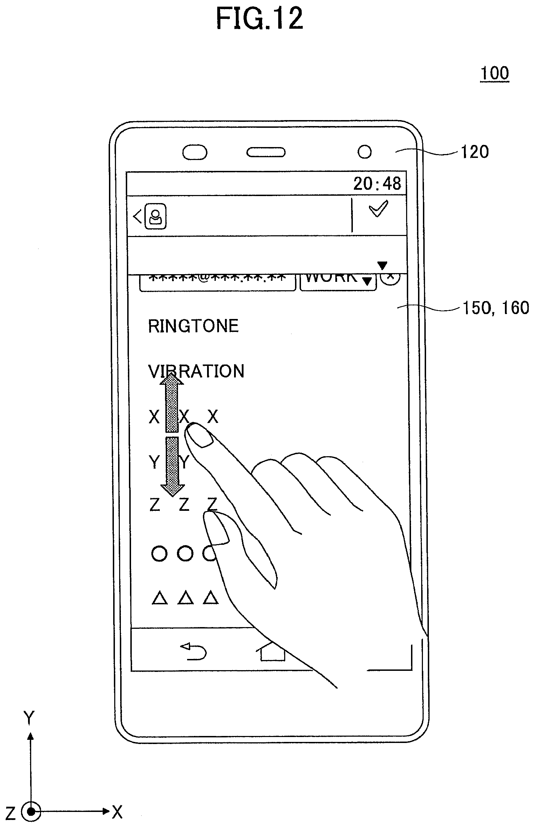

FIG. 12 to FIG. 15 are diagrams illustrating operating examples of the electronic device 100 of the first embodiment. Here, in order to report to the user, only by a tactile sensation, a state of the scrolling operation, the electronic device 100 drives the vibrating element 140 according to the following vibration patterns.

When the image 500 (see FIG. 8) is scrolled in a scrollable direction by a manipulation input performed on the top panel 120, the electronic device 100 continuously generates, at the top panel 120, the natural vibration in the ultrasound frequency band of the amplitude A1. Such a vibration pattern is an example of the above described vibration pattern P1.

When the image 500 (see FIG. 8) is scrolled in a scrollable direction by a scrolling operation performed on the top panel 120 such that the vicinal area (502A) is displayed on the display panel 160, the electronic device 100 repeatedly turns on and off the vibrating element 140 at short cycles. Such a vibration pattern is an example of the above described vibration pattern P2.

When the image 500 (see FIG. 8) is scrolled by a manipulation input performed on the top panel 120 such that the edge AP1-AP2 (see FIG. 8) is displayed on the display panel 160, the electronic device 100 turns off the vibrating element 140. Such a vibration pattern is an example of the above described vibration pattern P3.

For example, as illustrated in FIG. 12, a case will be described in which a scrolling operation is performed, on the top panel 120 of the electronic device 100, in the positive side in the Y axis direction or in the negative side in the Y axis direction. Here, as an initial state, the vicinal areas 502A and 502B (see FIG. 8) of the image 500 are not displayed on the display panel 160.

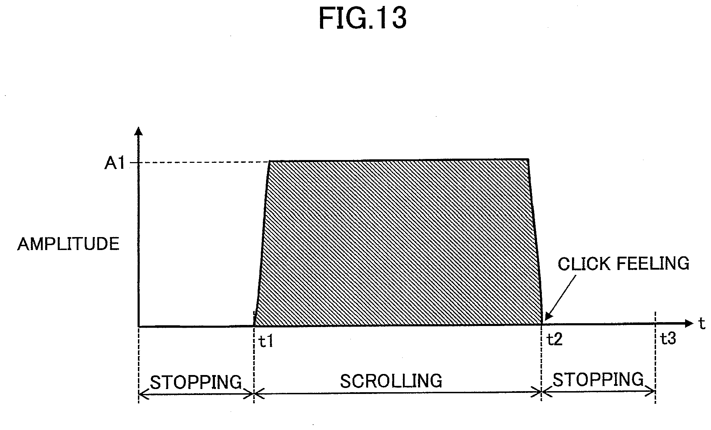

As illustrated in FIG. 13, when the user's fingertip touches the top panel 120 at time t1 to start a scrolling operation from such an initial state, the vibrating element 140 is turned on from off by the drive controlling part 240. As a result, the natural vibration in the ultrasound frequency band with the amplitude A1 is generated at the top panel 120.

When the scrolling operation is performed from time t1 to time t2 by the user's fingertip, the natural vibration in the ultrasound frequency band of the amplitude A1 is continuously generated at the top panel 120, and the user obtains, through the user's fingertip, a smooth tactile sensation with a low friction force. As a result, the user can determine, through the tactile sensation at the user's fingertip, that the scrolling operation is performed in a scrollable direction.

When the scrolling operation by the user's fingertip is completed at time t2, the drive controlling part 240 turns off the vibrating element 140. Thus, the amplitude of the top panel 120 becomes zero immediately after time t2. Further, the user can obtain, through the user's fingertip, the tactile sensation of the presence of a convex portion on the surface of the top panel 120, and can recognize that the scrolling of the image 500 is stopped. Note that the user separates the user's fingertip from the top panel 120 at time t3.

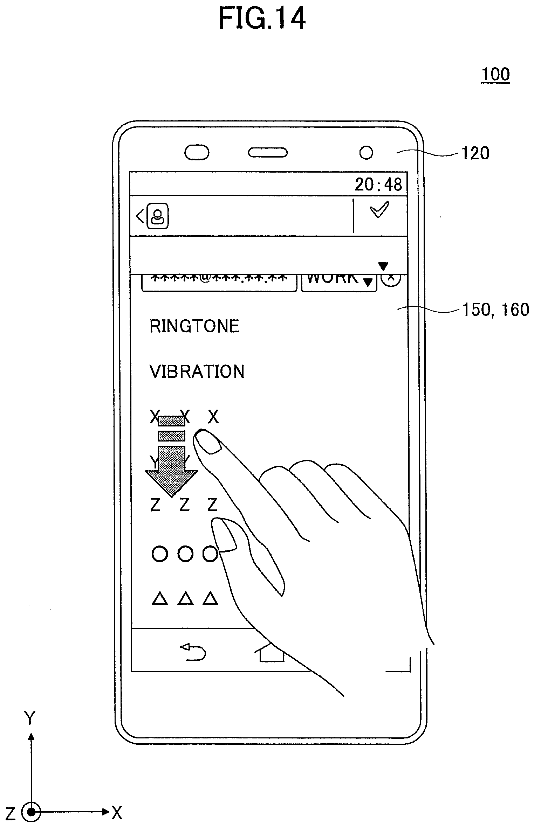

Further, as an example, as illustrated in FIG. 14, a case will be described in which the user performs a scrolling operation, on the top panel 120 of the electronic device 100, in the negative side in the Y axis direction from an initial state similar to the above.

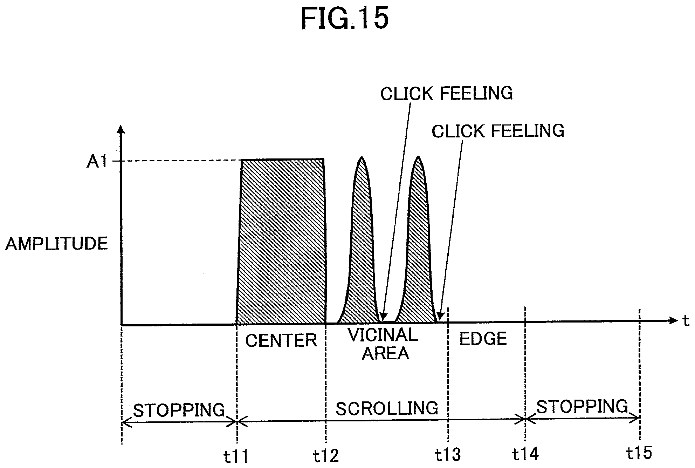

As illustrated in FIG. 15, when the user's fingertip touches the top panel 120 at time t11 to start a scrolling operation, the vibrating element 140 is turned on from off by the drive controlling part 240. As a result the natural vibration in the ultrasound frequency band with the amplitude A1 is generated at the top panel 120.

When the user further scrolls the top panel 120 in the negative side in the Y axis direction such that the vicinal area 502A is displayed on the display panel 160 at time t12, the electronic device 100 repeatedly turns on and off the vibrating element 140 at short cycles. As a result, an intermittent natural vibration in the ultrasound frequency band of the amplitude A1 is generated at short cycles at the top panel 120, and the user feels a click feeling through the user's fingertip. As a result, the user can determine, through the tactile sensation at the user's fingertip, that an end of the scrollable image 500 becomes closer.

Subsequently, when the user further scrolls the top panel 120 in the negative side in the Y axis direction such that the edge AP1-AP2 (see FIG. 8) is displayed on the display panel 160 at time t13, the electronic device 100 turns off the vibrating element 140.

As a result, a vibration becomes not generated at the top panel 120, and the kinetic friction force applied to the user's fingertip increases. Then, the user can determine having reached the edge AP1-AP2 (see FIG. 8) of the scrollable image 500, through the tactile sensation at the user's fingertip.

When the scrolling operation by the user's fingertip is completed at time t14, the drive controlling part 240 turns off the vibrating element 140. Note that the user separates the user's fingertip from the top panel 120 at time t15.

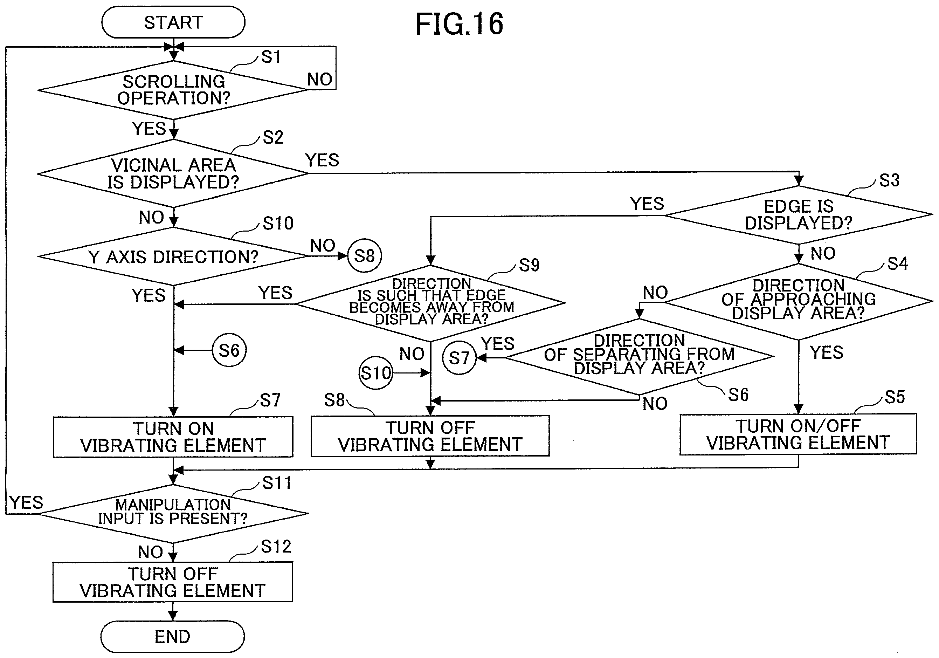

FIG. 16 is a flowchart illustrating a process that is executed by the drive controlling part 240 of the electronic device 100 according to the first embodiment.

An operating system (OS) of the electronic device 100 executes control for driving the electronic device 100 every predetermined control cycle. Accordingly, the drive controlling apparatus 300 performs calculation for every predetermined control cycle. The same applies to the drive controlling part 240. The drive controlling part 240 repeatedly executes the flow illustrated in FIG. 10 for every predetermined control cycle.

The drive controlling apparatus 300 starts the process when the electronic device 100 is powered on (START).

The drive controlling apparatus 300 determines whether a scrolling operation is performed in step S1. The drive controlling apparatus 300 may determine whether the scrolling operation is performed based on whether coordinates of a manipulation input are continuously changed. The drive controlling apparatus 300 repeatedly executes the process of step S1 until determining that a scrolling operation is performed.

Upon determining that a scrolling operation is performed (YES in step S1), the drive controlling apparatus 300 determines whether a vicinal area is being displayed on the display panel 160 in step S2.

The drive controlling apparatus 300 may determine whether the vicinal area is being displayed on the display panel 160, based on whether there is a portion overlapping the display area and the vicinal area coordinate data associated with an application ID in the data illustrated in FIG. 9.

Upon determining that the vicinal area is being displayed (YES in step S2), the drive controlling apparatus 300 determines whether an edge of the scrollable image is being displayed on the display panel 160 in step S3.

The drive controlling apparatus 300 may determine whether the edge is being displayed on the display panel 160, based on whether the edge coordinate data associated with the application ID in FIG. 9 is included in the display area.

Upon determining that the edge of the scrollable image is not being displayed on the display panel 160 (NO in step S3), the drive controlling apparatus 300 determines whether a direction of the scrolling operation is a direction such that the edge becomes closer to the display area in the Y axis direction in step S4.

First, the drive controlling apparatus 300 may determine whether the scrolling operation is in the Y axis direction. If the scrolling operation is in the Y axis direction, the drive controlling apparatus 300 may determine whether the direction is such that the edge approaches the display area in the Y axis direction, based on a positional relationship between coordinates of the edge and coordinates of the display area.

Because the drive controlling apparatus 300 performs calculation for each predetermined control cycle, the drive controlling apparatus 300 may vectorize the positional change of the edge obtained by the current and previous calculations to determine whether the vector approaches the display area.

Upon determining that the scrolling direction is the direction such that the edge approaches the display area in the Y axis direction (YES in step S4), the drive controlling apparatus 300 repeatedly turns on and off the vibrating element 140 at short cycles in step S5. This vibration pattern is the vibration pattern from time t12 to time t13 illustrated in FIG. 15, and corresponds to the vibration pattern P2.

As a result, the intermittent natural vibration in the ultrasound frequency band of the amplitude A1 is generated at short cycles at the top panel 120, and the user feels a click feeling through the user's fingertip. As a result, the user can determine, through the tactile sensation at the user's fingertip, that the end of the scrollable image 500 becomes closer.

Upon determining that the scrolling direction is not the direction such that the edge approaches the display area in the Y axis direction (NO in step S4), the drive controlling apparatus 300 determines whether the direction of the scrolling operation is a direction such that the edge becomes away from the display area in the Y axis direction.

First, the drive controlling apparatus 300 may determine whether the scrolling operation is in the Y axis direction. If the scrolling operation is in the Y axis direction, the drive controlling apparatus 300 may determine whether the direction is such that the edge becomes away from the display area in the Y axis direction, based on whether the positional relationship between the coordinates of the edge and the coordinates of the display area becomes more farther.

Because the drive controlling apparatus 300 performs calculation for each predetermined control cycle, the drive controlling apparatus 300 may vectorize the positional change of the edge obtained by the current and previous calculations to determine whether the vector becomes away from the display area.

Upon determining that the direction of the scrolling operation is the direction such that the edge becomes away from the display area in the Y axis direction (YES in step S6), the drive controlling apparatus 300 continuously turns on the vibrating element 140 in step S7.

This is in a case where the scrolling operation is performed in the direction such that the edge becomes away from the display area in a state in which the vicinal area is being displayed on the display panel 160.

A case in which the scrolling operation is performed such that the edge becomes away from the display area (in the direction such that the central area is to be displayed on the display area) when the vicinal area is displayed on the display panel 160 is a situation in which an operation is performed in a scrollable direction of the image 500. In such a case, in order to reduce the kinetic friction force at the user's fingertip by the squeeze effect and to notify the user that it is the scrollable direction through the tactile sensation, the vibrating element 140 is continuously turned on.

Upon determining that the direction of the scrolling operation is not the direction such that the edge becomes away from the display area in the Y axis direction (NO in step S6), the drive controlling apparatus 300 turns off the vibrating element 140 in step S8.

As a result, a vibration becomes not generated at the top panel 120, and the kinetic friction force applied to the user's fingertip increases. Then, the user can determine having reached the edge (for example, AP1-AP2 (see FIG. 8)) of the scrollable image 500, through the tactile sensation at the user's fingertip.

Upon determining that the edge of the scrollable image is being displayed on the display panel 160 (YES in step S3), the drive controlling apparatus 300 determines whether the scrolling operation is performed in a direction such that the edge becomes away from the display area in the Y axis direction in step S9.

First, the drive controlling apparatus 300 may determine whether the scrolling operation is in the Y axis direction. If the scrolling operation is in the Y axis direction, the drive controlling apparatus 300 may determine whether the scrolling operation is performed in the direction such that the edge becomes away from the display area in the Y axis direction, based on whether the positional relationship between the coordinates of the edge and the coordinates of the display area becomes more farther. The change of the position of the edge may be vectorized to determine whether the vector becomes away from the display area.

Upon determining that the scrolling operation is performed in the direction such that the edge becomes away from the display area in the Y axis direction (YES in step S9), the drive controlling apparatus 300 continuously turns on the vibrating element 140 in step S7.

This is a case in which a scrolling operation is performed in a direction such that the edge becomes away from the display area in a state in which the edge is being displayed on the display panel 160.

This is for notifying, through the tactile sensation, the user that the scrolling direction is in the scrollable direction by reducing the kinetic friction force at the user's fingertip by the squeeze effect in a case where the scrolling operation is performed such that the edge becomes away from the display area (in the direction such that the central area is to be displayed on the display area) when the edge is being displayed on the display panel 160.

Upon determining that the scrolling operation is not performed in the direction such that the edge becomes away from the display area in the Y axis direction (NO in step S9), the drive controlling apparatus 300 turns off the vibrating element 140 in step S8.

As a result, a vibration becomes not generated at the top panel 120, and the kinetic friction force applied to the user's fingertip increases. For example, in a case where the user performs a scrolling operation in a direction to pull the edge toward the center of the display area in the Y axis direction, the user can determine having reached the edge (for example, AP1-AP2 (see FIG. 8)) of the scrollable image 500, through the tactile sensation at the user's fingertip.

Further, in a case where the user performs a scrolling operation in a direction that is not the Y axis direction, the user can determine that the scrolling direction is in an un-scrollable direction through the tactile sensation at the user's fingertip.

Upon determining that the vicinal area is not being displayed on the display area (NO in step S2), the drive controlling apparatus 300 determines whether the direction of the scrolling operation is the Y axis direction in step S10.

The drive controlling apparatus 300 may determine whether the direction of the scrolling operation is the Y axis direction, based on whether coordinates of the manipulation input that is input from the touch panel 150 are changed in the Y axis direction. At this time, the change of the coordinates of the manipulation input may be determined based on whether a vector, which is obtained by vectorizing the change of the coordinates of the manipulation input, is directed in the Y axis direction.

Upon determining that the direction of the scrolling operation is the Y axis direction (YES in step S10), the drive controlling apparatus 300 continuously turns on the vibrating element 140 in step S7.

This is a case in which a scrolling operation is performed in the Y axis direction in a state in which the central area is being displayed on the display panel 160. In such a case, the kinetic friction force at the user's fingertip is reduced by the squeeze effect to notify the user that it is the scrollable direction through the tactile sensation.

Upon determining that the direction of the scrolling operation is not the Y axis direction (NO in step S10), the drive controlling apparatus 300 turns off the vibrating element 140 in step S8.

As a result, a vibration is not generated at the top panel 120, and the kinetic friction force applied to the user's fingertip increases. In a case where the user performs a scrolling operation in a direction that is not the Y axis direction in a state in which the central area is being displayed on the display panel 160, the vibrating element 140 is turned off in order to notify the user that the direction is in an un-scrollable direction of the image 500 through the tactile sensation at the user's fingertip.

Upon completing the process of step S5, S7, or S8, the drive controlling apparatus 300 determines whether a manipulation input is being performed in step S11. The drive controlling apparatus 300 can determine the presence/absence of a manipulation input based on whether the user touches the top panel 120 by the user's fingertip. Therefore, the drive controlling apparatus 300 determines the presence/absence of a manipulation input based on whether the position data is input from the driver IC 151 (FIG. 6).

Upon determining that a manipulation input is being performed (YES in S11), the drive controlling apparatus 300 returns the flow to step S1. This is for continuing the series of processes to obtain the direction and the position of the scrolling operation in a next control cycle.

Upon determining that a manipulation input is not being performed (NO in step S11), the drive controlling apparatus 300 turns off the vibrating element 140 in step S12. This is because it is not required to drive the vibrating element 140 in a case where a manipulation input is not being performed.

Upon turning off the vibrating element 140 in step S12, the drive controlling apparatus 300 completes the series of processes (END).

As described above, according to the first embodiment, in a case where an edge or a vicinal area becomes closer when a scrolling operation is performed on the top panel 120, the pattern of vibration generated at the top panel 120 is changed. Therefore, the user can know the presence of the edge and the vicinal area simply through the tactile sensation at the user's fingertip.

Further, because the pattern of vibration at the edge and the pattern of vibration at the vicinal area that are to be generated at the top panel 120 differ, the user can distinguish the edge from the vicinal area simply through the tactile sensation at the user's fingertip.

Further, because the vibrating element 140 is turned on when a scrolling operation is performed in a scrollable direction on the image 500, and the vibrating element 140 is turned off when a scrolling operation is performed in an un-scrollable direction on the image 500, the user can perceive the scrollable direction only through the tactile sensation at the user's fingertip.

As described above, according to the first embodiment, it is possible to provide the drive controlling apparatus 300, the electronic device 100, the drive controlling program, and the drive controlling method such that they are user-friendly.

In a case where there is only one scrollable direction of the display panel 160, it is often the case that the user cannot intuitively perceive whether the direction is the vertical direction or the horizontal direction. The image is not scrolled even when the user slides the user's fingertip in an un-scrollable direction, and it is often the case that the user cannot grasp whether the scrolling operation can be performed.

Further it is often the case that the user repeats the scrolling operation because the user cannot determine whether such a situation is due to specifications of the electronic device 100 or is because the input onto the touch panel 150 is not well recognized. In such a case, the user can become irritated.

With respect to the above, according to the electronic device 100 of the first embodiment, when the user performs the scrolling operation on the top panel 120, the user can understand, through the tactile sensations, various situations such as whether a position or direction is scrollable, or whether a vicinal area or an edge has been attained.

That is, without need of closely looking at the display panel, the user can intuitively sense, through the tactile sensation at the user's fingertip, the presence of the vicinal area and the edge and whether a direction is scrollable.

Note that although the image 500 cannot be scrolled in the U axis direction but can be scrolled only in the V axis direction in the above description, alternatively, the image 500 may be scrollable in both the U axis direction and the V axis direction. Additionally, the image 500 may be scrollable only in the U axis direction.

In the embodiment described above, the vibrating element 140 is turned on at a constant intensity when the central area is within the display area, and the vibrating element 140 is repeatedly turned on and off at short cycles when the vicinal area is within the display area. However, when the vicinal area is within the display area, the vibrating element 140 may be turned on at a constant intensity, which is obtained by reducing the intensity for when the central area is within the display area. When the squeeze effect is reduced, the user can understand a difference between the central area and the vicinal area through the tactile sensation at the user's fingertip.

Further, the electronic device 100 of the embodiment generates the driving signal by causing the amplitude modulator 320 to modulate only the amplitude of the sinusoidal wave, which is in the ultrasound frequency band, generated by the sinusoidal wave generator 310. The frequency of the sinusoidal wave in the ultrasound frequency band generated by the sinusoidal wave generator 310 is equal to the natural vibration frequency of the top panel 120. Further, this natural vibration frequency is set in consideration of the vibrating element 140.

That is, the driving signal is generated by the amplitude modulator 320 modulating only the amplitude of the sinusoidal wave in the ultrasound frequency band generated by the sinusoidal wave generator 310, without modulating the frequency or the phase of the sinusoidal wave.

Accordingly, it becomes possible to generate, at the top panel 120, the natural vibration in the ultrasound frequency band of the top panel 120 and to decrease with certainty the kinetic friction coefficient applied to the user's finger tracing the surface of the top panel 120 by utilizing the layer of air provided by the squeeze effect. Further, it becomes possible to provide a favorable tactile sensation to the user as if a concavo-convex portion were present on the surface of the top panel 120 by utilizing the Sticky-band Illusion effect.

In the embodiment described above, in order to provide the tactile sensations to the user as if concave-convex portions were present on the top panel 120, the vibrating element 140 is switched on/off. Turning off the vibrating element 140 is equal to setting the amplitude value, represented by the driving signal used to drive the vibrating element 140, to be zero.

However, it is not necessary to turn the vibrating element 140 from on to off in order to provide such tactile sensations. For example, the vibrating element 140 may be driven to decrease the amplitude instead of turning off the vibrating element 140. For example, similar to turning the vibrating element 140 from on to off, the tactile sensation may be provided to the user as if a concave-convex portion were present on the top panel 120 by decreasing the amplitude to approximately one-fifth.

In this case, the vibrating element 140 is driven by the driving signal such that the intensity of the vibration of the vibrating element 140 is changed. As a result, the intensity of the natural vibration generated at the top panel 120 is changed, and it becomes possible to provide the tactile sensation to the user's fingertip as if a concavo-convex portion were present.

When the vibrating element 140 is turned off to weaken the vibration in order to change the intensity of the vibration of the vibrating element 140, on/off of the vibrating element 140 is switched. Switching on/off the vibrating element 140 means driving the vibrating element 140 intermittently.

A perception experiment was performed for approximately 1000 persons to operate the electronic device 100. It was found that every person tested was able to feel a concavo-convex feeling. Further, although it is said that a resolution ability of humans to perceptually distinguish two types of tactile sensations such as concavity and convexity is by approximately intervals of 10 ms to 100 ms, the persons tested could sufficiently sense the two even when the amplitude of the natural vibration in the ultrasound frequency band was switched on/off at an interval less than or equal to 100 ms. From the above, it was clear that a resolution ability as high as a perceptual resolution ability of humans could be expressed.

<Second embodiment>

A second embodiment is for causing the electronic device 100 of the first embodiment to perform operations that differ from those of the first embodiment. Hence, in the second embodiment, the electronic device 100 of the first embodiment is used to describe the operations.

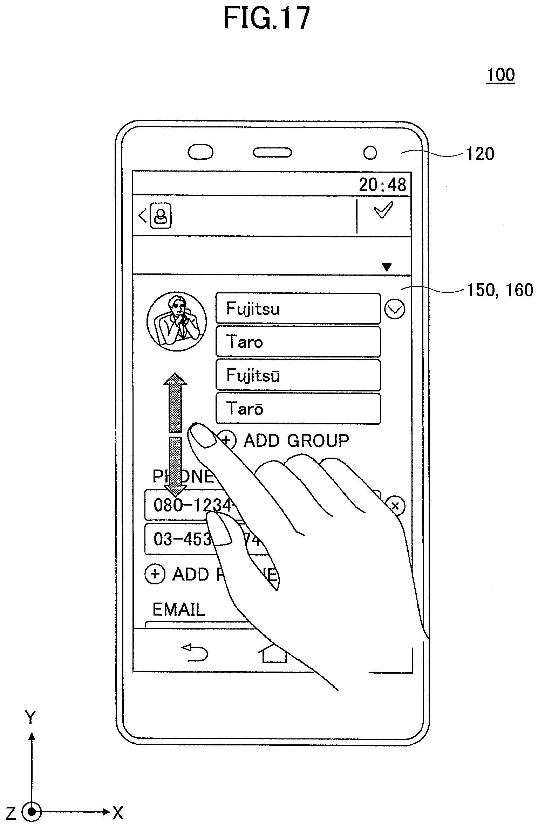

FIG. 17 to FIG. 20 are diagrams illustrating operating examples of the electronic device 100 according to the second embodiment. Here, in order to report to the user, only by a tactile sensation, a state of the scrolling operation, the electronic device 100 drives the vibrating element 140 according to the following vibration patterns.

When the image 500 (see FIG. 8) is scrolled in a scrollable direction by a manipulation input performed on the top panel 120, the electronic device 100 continuously generates, at the top panel 120, the natural vibration in the ultrasound frequency band of the amplitude A1. Such a vibration pattern is an example of the vibration pattern P1 described in the first embodiment.

When the image 500 (see FIG. 8) is scrolled in an un-scrollable direction by a scrolling operation performed on the top panel 120, the electronic device 100 repeatedly turns on and off the vibrating element 140 at short cycles. Such a vibration pattern is an example of the vibration pattern P2 described in the first embodiment.

According to the second embodiment, the vibration pattern is switched between a scrollable direction and an un-scrollable direction.

For example, as illustrated in FIG. 17, a case will be described in which the top panel 120 of the electronic device 100 is scrolled in the positive side in the Y axis direction or in the negative side in the Y axis direction.

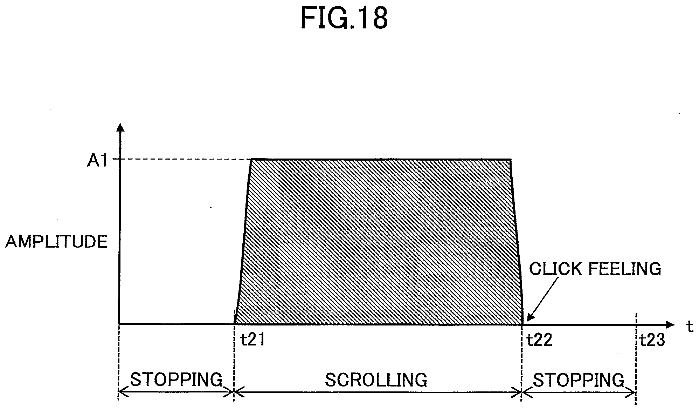

As illustrated in FIG. 18, when the user's fingertip touches the top panel 120 at time t21 to start a scrolling operation in a scrollable direction, the vibrating element 140 is turned on from off by the drive controlling part 240. As a result, the natural vibration in the ultrasound frequency band with the amplitude A1 is generated at the top panel 120.

When the scrolling operation is performed in the scrollable direction from time t21 to time t22 by the user's fingertip, the natural vibration in the ultrasound frequency band of the amplitude A1 is continuously generated at the top panel 120, and the user obtains, through the user's fingertip, a smooth tactile sensation with a low friction force. As a result, the user can determine, through the tactile sensation at the user's fingertip, that the scrolling operation is performed in a scrollable direction.

When the scrolling operation by the user's fingertip is completed at time t22, the drive controlling apparatus 300 turns off the vibrating element 140. Thus, the amplitude of the top panel 120 becomes zero immediately after time t22. Further, the user can obtain, through the user's fingertip, the tactile sensation of the presence of a convex portion on the surface of the top panel 120, and can recognize that the scrolling of the image 500 is stopped. Note that the user separates the user's fingertip from the top panel 120 at time t23.

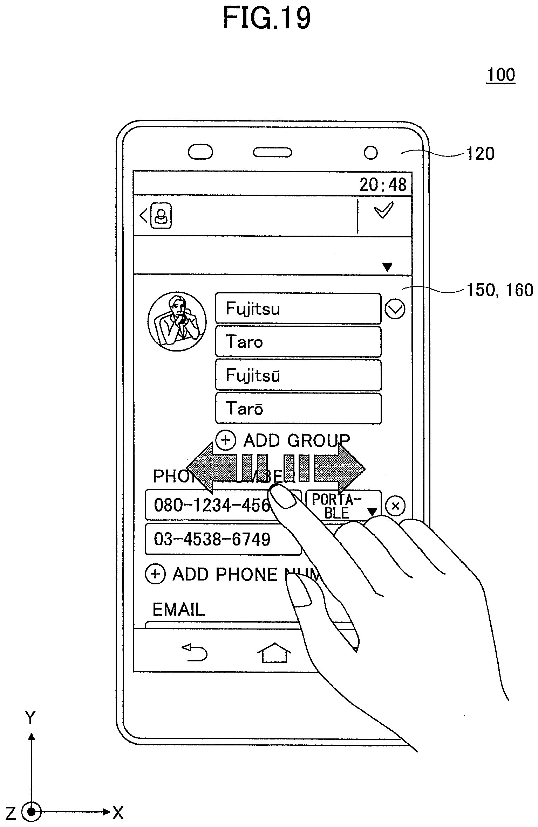

Further, as illustrated in FIG. 19, a case will be described in which the user performs a scrolling operation on the top panel 120 in an un-scrollable direction.

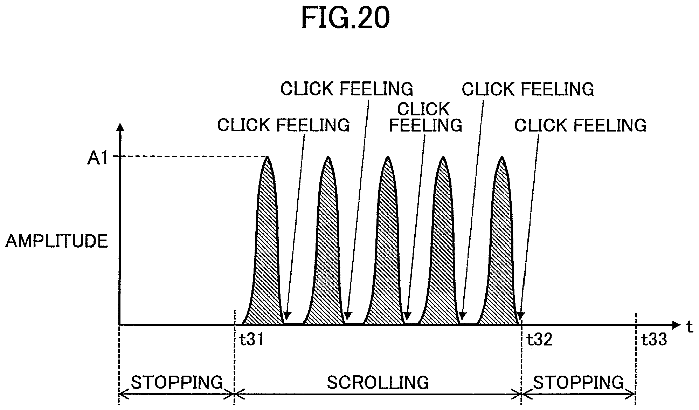

As illustrated in FIG. 20, when the user's fingertip touches the top panel 120 at time t31 to start a scrolling operation in an un-scrollable direction, the electronic device 100 repeatedly turns on and off the vibrating element 140 at short cycles. As a result, an intermittent natural vibration in the ultrasound frequency band of the amplitude A1 is generated at short cycles at the top panel 120, and the user feels a click feeling through the user's fingertip. As a result, the user can determine, through the tactile sensation at the user's fingertip, that the scrolling operation is performed in an un-scrollable direction.

Subsequently, when the user further performs the scrolling operation on the top panel 120 in the un-scrollable direction to complete the scrolling operation at time t32, the drive controlling apparatus 300 turns off the vibrating element 140. Note that the user separates the user's fingertip from the top panel 120 at time t33.

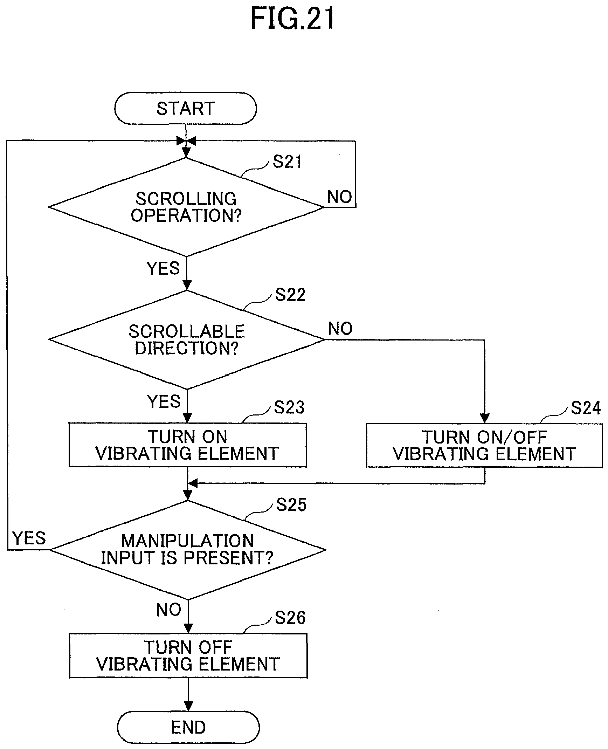

FIG. 21 is a flowchart illustrating a process that is executed by the drive controlling apparatus 300 of the electronic device 100 according to the second embodiment.

The drive controlling apparatus 300 starts the process when the electronic device 100 is powered on (START).

The drive controlling apparatus 300 determines whether a scrolling operation is performed in step S21. The drive controlling apparatus 300 may determine whether a scrolling operation is performed based on whether coordinates of a manipulation input are continuously changed. The drive controlling apparatus 300 repeatedly executes the process of step S1 until determining that a scrolling operation is performed.

Upon determining that a scrolling operation is performed (YES in step S21), the drive controlling apparatus 300 determines whether it is a scrollable direction in step S22.

Upon determining that the direction is the scrollable direction (YES in step S22), the drive controlling apparatus 300 continuously turns on the vibrating element 140 in step S23.

In a case where the scrolling operation is performed in the scrollable direction of the image 500, in order to reduce the kinetic friction force at the user's fingertip by the squeeze effect and to notify the user that the direction is the scrollable direction through the tactile sensation, the vibrating element 140 is continuously turned on.

Upon determining that the direction is an un-scrollable direction (NO in step S22), the drive controlling apparatus 300 repeatedly turns on and off the vibrating element 140 at short cycles in step S24.

An intermittent natural vibration in the ultrasound frequency band of the amplitude A1 is generated at short cycles at the top panel 120, and the user feels a click feeling through the user's fingertip. As a result, the user can determine, through the tactile sensation at the user's fingertip, that the scrolling operation is performed in an un-scrollable direction.

Upon completing the process of step S23 or S24, the drive controlling apparatus 300 determines whether a manipulation input is being performed in step S25. The drive controlling apparatus 300 can determine the presence/absence of a manipulation input based on whether the user touches the top panel 120 by the user's fingertip. Therefore, the drive controlling apparatus 300 determines the presence/absence of a manipulation input based on whether the position data is input from the driver IC 151 (FIG. 6).

Upon determining that a manipulation input is being performed (YES in S25), the drive controlling apparatus 300 returns the flow to step S21. This is for continuing the series of processes to obtain the direction and the position of the scrolling operation in a next control cycle.

Upon determining that a manipulation input is not being performed (NO in step S25), the drive controlling apparatus 300 turns off the vibrating element 140 in step S26. This is because it is not required to drive the vibrating element 140 in a case where a manipulation input is not being performed.

Upon turning off the vibrating element 140 in step S26, the drive controlling apparatus 300 completes the series of processes (END).

As described above, according to the second embodiment, when a scrolling operation is performed on the top panel 120 in a scrollable direction, the vibrating element 140 is continuously turned on, and when a scrolling operation is performed on the top panel 120 in an un-scrollable direction, the vibrating element 140 is repeatedly turned on and off at short cycles. Thereby, the user can understand whether the direction is scrollable simply through the tactile sensation at the user's fingertip.

As described above, according to the second embodiment, it is possible to provide the drive controlling apparatus 300, the electronic device 100, the drive controlling program, and the drive controlling method such that they are user-friendly.

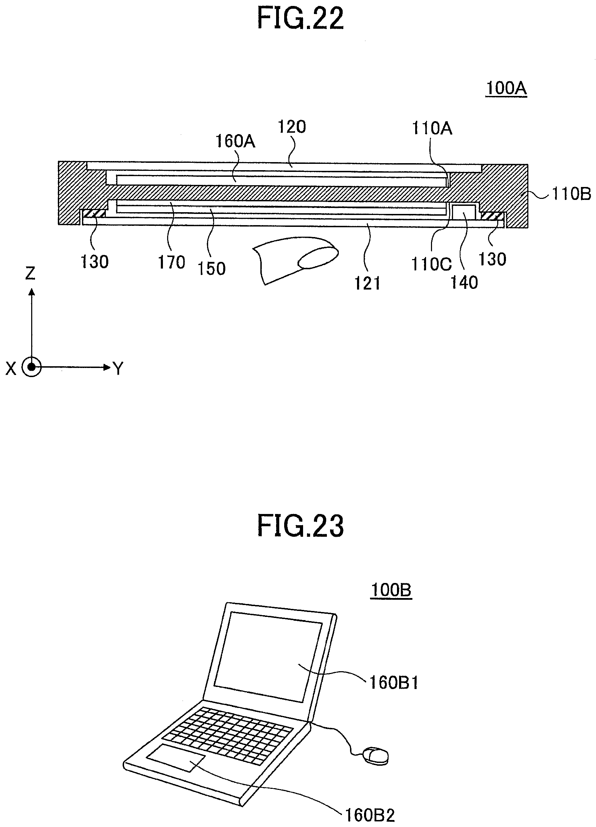

Here, variation examples of the electronic device 100 of the first and second embodiments will be described with reference to FIG. 22 to FIG. 25.

FIG. 22 is a diagram illustrating a cross section of an electronic device 100A according to a variation example. The cross section illustrated in FIG. 22 corresponds to the cross section taken along the line A-A as illustrated in FIG. 3. In FIG. 22, an XYZ coordinate system, which is an orthogonal coordinate system, similar to that illustrated in FIG. 3 is defined.

The electronic device 100A includes a housing 110B, the top panel 120, a top panel 121, the double-faced adhesive tape 130, the vibrating element 140, the touch panel 150, a display panel 160A, and the substrate 170.

The electronic device 100A has a configuration in which the touch panel 150 of the electronic device 100 illustrated in FIG. 3 is provided on the back face side (the negative side in the Z axis direction). Thus, in comparison with the electronic device 100 illustrated in FIG. 3, the double-faced adhesive tape 130, the vibrating element 140, the touch panel 150, and the substrate 170 are disposed on the back face side.

A recessed portion 110A at the positive side in the Z axis direction and a recessed portion 110C at the negative side in the Z axis direction are formed on the housing 110B. The display panel 160A is disposed inside the recessed portion 110A and is covered with the top panel 120. The substrate 170 and the touch panel 150 are stacked and disposed inside the recessed portion 110C. The top panel 121 is secured to the housing 110B with the double-faced adhesive tape 130. The vibrating element 140 is disposed on a positive side surface of the top panel 121 in the Z axis direction.

When on/off of the vibrating element 140 is switched to generate the natural vibration in the ultrasound frequency band at the top panel 121 in accordance with a manipulation input performed on the top panel 121 in the electronic device 100A illustrated in FIG. 22, in a way similar to that of the electronic device 100 illustrated in FIG. 3, the electronic device 100A with which a user can sense tactile sensations corresponding to an image displayed on the display panel 160A through the user's fingertip can be provided.

Although FIG. 22 illustrates the electronic device 100A in which the touch panel 150 is provided at the back surface side, the touch panel 150 may be provided for each of the front surface side and the back surface side by combining the structure illustrated in FIG. 3 and the structure illustrated in FIG. 22.

FIG. 23 is a diagram illustrating an electronic device 100B of a variation example. The electronic device 100B is a notebook Personal Computer (PC).

The PC 100B includes a display panel 160B1 and a touch pad 160B2.

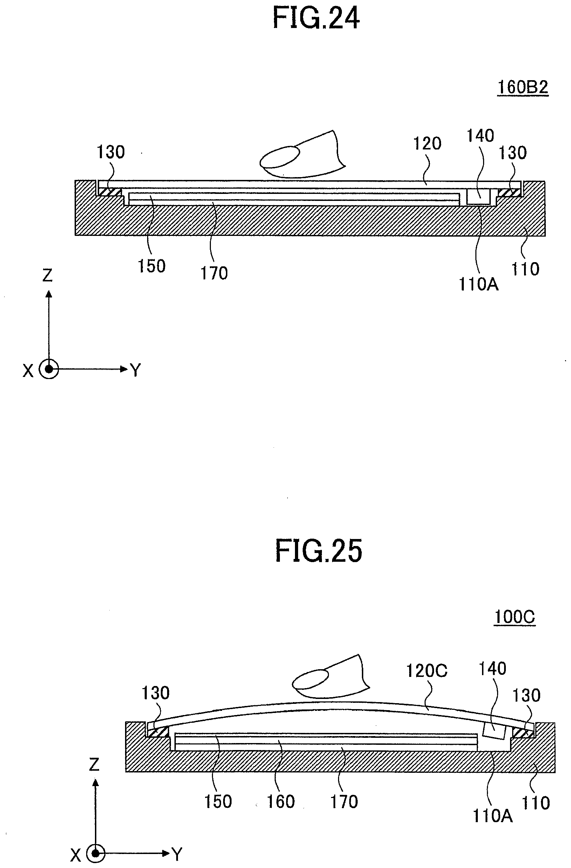

FIG. 24 is a diagram illustrating a cross section of the touch pad 160B2 of the electronic device 100B of the variation example. The cross section illustrated in FIG. 24 corresponds to the cross section taken along the line A-A as illustrated in FIG. 3. In FIG. 24, an XYZ coordinate system, which is an orthogonal coordinate system, similar to that illustrated in FIG. 3 is defined.

The touch pad 160B2 has a configuration in which the display panel 160 is omitted from the electronic device 100 illustrated in FIG. 3.

By switching on/off the vibrating element 140 to generate the natural vibration in the ultrasound frequency band at the top panel 120 in accordance with a manipulation input performed on the touch pad 160B2 in the electronic device 100B as a PC as illustrated in FIG. 23, in a way similar to that of the electronic device 100 illustrated in FIG. 3, an operational feeling can be provided to the user's fingertip through tactile sensations in accordance with an amount of movement of the manipulation input performed on the touch pad 160B2.

Further, by providing the vibrating element 140 at the back surface of the display panel 160B1, in a way similar to that of the electronic device 100 illustrated in FIG. 3, an operational feeling can be provided to the user's fingertip through tactile sensations in accordance with an amount of movement of the manipulation input performed on the display panel 160B1. In this case, the electronic device 100 illustrated in FIG. 3 may be provided instead of the display panel 160B1.

FIG. 25 is a plan view illustrating an operating state of an electronic device 100C of a variation example.

The electronic device 100C includes the housing 110, a top panel 120C, the double-faced adhesive tape 130, the vibrating element 140, the touch panel 150, the display panel 160 and the substrate 170.

Except for the top panel 120C which is a curved glass, the electronic device 100C illustrated in FIG. 25 has a configuration similar to that of the electronic device 100 of the first embodiment illustrated in FIG. 3.

The top panel 120C is curved such that its center portion protrudes towards a positive side in the Z axis direction. Although FIG. 25 illustrates a cross sectional shape of the top panel 120C in the YZ plane, a cross sectional shape in a XZ plane is similar to the cross sectional shape in the YZ plane.

In this way, it is possible to provide favorable tactile sensations by using the top panel 120C of the curved glass. In particular, it is effective for a case where a shape of an actual object to be displayed as an image is curved.

Although examples of a drive controlling apparatus, an electronic device, a drive controlling program, and a drive controlling method according to the embodiments of the present invention have been described above, the present invention is not limited to the embodiments specifically disclosed and various variations and modifications may be made without departing from the scope of the claims.

**Description of Reference Symbols**

100, 100A, 100B, 100C electronic device
110 housing
120 top panel
130 double-faced adhesive tape
140 vibrating element

150 touch panel
160 display panel
170 substrate
200 controlling part
220 application processor
230 communication processor
240 drive controlling part
240 daga generating part
250 memory
300 drive controlling apparatus
310 sinusoidal wave generator
320 amplitude modulator

**Claims**

1. A drive controlling apparatus for driving a vibrating element of an electronic device, the electronic device including a display part, a top panel disposed on a display surface side of the display part and having a manipulation surface, a coordinate detector configured to detect coordinates of a manipulation input performed on the manipulation surface, and the vibrating element, which is configured to generate a vibration at the manipulation surface, the drive controlling apparatus comprising:

   a storage part configured to store image data for a scrollable image, to be displayed on the display part, in association with edge position data that represents a position of an edge of the image, or with direction data that represents a scrollable direction of the image;
   a calculating part configured to calculate, based on the coordinates detected by the coordinate detector, an operation amount and an operation direction of a scrolling operation performed on the manipulation surface; and
   a drive controlling part configured to drive, upon the scrolling operation being performed on the top panel, the vibrating element by using a driving signal for generating a natural vibration in an ultrasound frequency band at the manipulation surface, the drive controlling part being configured to drive, based on the operation amount and the operation direction of the scrolling operation calculated by the calculating part and based on the edge position data, the vibrating element according to a first pattern when the edge is not being displayed on the display part, and to drive the vibrating element according to a second pattern when the edge is being displayed on the display part, or being configured to drive, based on the operation amount and the operation direction of the scrolling operation and based on the direction data, the vibrating element according to a third pattern when the direction of the scrolling operation is the scrollable direction and to drive the vibrating element according to a fourth pattern when the direction of the scrolling operation is not the scrollable direction.

2. The drive controlling apparatus according to claim 1, wherein the drive controlling part drives the vibrating element such that an intensity of the natural vibration according to the first pattern is stronger than an intensity of the natural vibration according to the second pattern.

3. The drive controlling apparatus according to claim 2, wherein the first pattern is a driving pattern that increases the intensity of the natural vibration when a central part of the scrollable image is being displayed on the display part, and decreases the intensity of the natural vibration when an edge area of the scrollable image is being displayed on the display part relative to when the central part is being displayed.

4. The drive controlling apparatus according to claim 3, wherein the first pattern is a driving pattern that intermittently weakens the intensity of the natural vibration when the edge area of the image is being displayed on the display part.

5. The drive controlling apparatus according to claim 3 or 4, wherein the drive controlling part strengthens the intensity of the natural vibration according to the first pattern when an area displayed on the displayed part within the image becomes closer to the central part from the edge of the image.

6. The drive controlling apparatus according to any one of claims 1 to 5, wherein an intensity of the natural vibration according to the second pattern is either zero or less than or equal to a predetermined value that is less than an intensity of the natural vibration according to the first pattern.

7. The drive controlling apparatus according to claim 1, wherein the drive controlling part drives the vibrating element such that an intensity of the natural vibration according to the third pattern is stronger than an intensity of the natural vibration according to the fourth pattern.

8. The drive controlling apparatus according to claim 7, wherein the third pattern is a driving pattern that maintains the intensity of the natural vibration at a predetermined intensity such that a squeeze effect is obtained on the top panel.

9. The drive controlling apparatus according to claim 7 or 8, wherein the fourth pattern is a driving pattern that repeats a first predetermined intensity and a second intensity that is weaker than the first intensity for an intensity of the natural vibration.

10. The drive controlling apparatus according to any one of claims 1, 7 and 8, wherein an intensity of the natural vibration according to the fourth pattern is either zero or less than or equal to a predetermined value that is less than an intensity of the natural vibration according to the third pattern.

11. An electronic device comprising:

the display part;
the top panel disposed on the display surface side of the display part and having the manipulation surface;
the coordinate detector configured to detect the coordinates of the manipulation input performed on the manipulation surface;
the vibrating element configured to generate the vibration at the manipulation surface; and
the drive controlling apparatus according to any one of claims 1 to 10.

12. A drive controlling program for driving a vibrating element of an electronic device, the electronic device including a display part; a top panel disposed on a display surface side of the display part and having a manipulation surface; a coordinate detector configured to detect coordinates of a manipulation input performed on the manipulation surface; and the vibrating element, which is configured to generate a vibration at the manipulation surface, the drive controlling program causing a computer, including a data storage part storing image data for a scrollable image, to be displayed on the display part, in association with edge position data that represents a position of an edge of the image, or with direction data that represents a scrollable direction of the image, to execute calculating, based on the coordinates detected by the coordinate detector, an operation amount and an operation direction of a scrolling operation performed on the manipulation surface; and driving, upon the scrolling operation being performed on the top panel, the vibrating element by using a driving signal for generating a natural vibration in an ultrasound frequency band at the manipulation surface, to drive, based on the operation amount and the operation direction of the scrolling operation and based on the edge position data, the vibrating element according to a first pattern when the edge is not being displayed on the display part, and drive the vibrating element according to a second pattern when the edge is being displayed on the display part, or to drive, based on the operation amount and the operation direction of the scrolling operation and based on the direction data, the vibrating element according to a third pattern when the direction of the scrolling operation is the scrollable direction and drive the vibrating element according to a fourth pattern when the direction of the scrolling operation is not the scrollable direction.

13. A drive controlling method for driving a vibrating element of an electronic device, the electronic device including a display part; a top panel disposed on a display surface side of the display part and having a manipulation surface; a coordinate detector configured to detect coordinates of a manipulation input performed on the manipulation surface; and the vibrating element, which is configured to generate a vibration at the manipulation surface, the drive controlling method being executed by a computer including a data storage part that stores image data for an image, to be displayed on the display part, in association with edge position data that represents a position of an edge of the image, or with direction data that represents a scrollable direction of the image, the drive controlling method comprising:

calculating, based on the coordinates detected by the coordinate detector, an operation amount and an operation direction of a scrolling operation performed on the manipulation surface; and
driving, upon the scrolling operation being performed on the top panel, the vibrating element by using a driving signal for generating a natural vibration in an ultrasound frequency band at the manipulation surface, to drive, based on the operation amount and the operation direction of the scrolling operation and based on the edge position data, the vibrating element according to a first pattern when the edge is not being displayed on the display part, and drive the vibrating element according to a second pattern when the edge is being displayed on the display part, or to drive, based on the operation amount and the operation direction of the scrolling operation and based on the direction data, the vibrating element according to a third pattern when the direction of the scrolling operation is the scrollable direction and drive the vibrating element according to a fourth pattern when the direction of the scrolling operation is not the scrollable direction.

# FIG.1

# FIG.2

# FIG.3

# FIG.4

(A)                                                                    120

Z
⊙——→Y
X

(B)                                                                    120

Z
↑
·——→Y
X

EP 3 282 344 A1

# FIG.5

(A)                                                    (B)

120                                                    120

HIGH
FRICTION          VIBRATION OFF          LOW
FRICTION          VIBRATION ON

LOW
FRICTION                                 HIGH
FRICTION
VIBRATION ON                             VIBRATION OFF

EP 3 282 344 A1

EP 3 282 344 A1

100

160 DISPLAY PANEL

DRIVER IC

200

220 APPLICATION PROCESSOR

RENDERING DATA

161

150 TOUCH PANEL

DRIVER IC

151

POSITION DATA

230 COMMUNI-CATION PROCESSOR

250 MEMORY

DRIVE CONTROLLING PART

240

300

SINUSOIDAL WAVE SIGNAL IN ULTRASOUND FREQUENCY BAND

AMPLITUDE DATA

320

310 SINUSOIDAL WAVE GENERATOR

AMPLITUDE MODULATOR

DRIVING SIGNAL

141 AMPLIFIER

140 VIBRATING ELEMENT

FIG.6

# FIG.7

# FIG.8

AP1 / AP2

502A

Fujitsu
Taro
Fujitsū
Tarō

⊕ ADD GROUP

PHONE NUMBER

080-1234-4569 | PORTA-BLE ▼ | ⊗
03-4538-6749 | HOME ▼ | ⊗

⊕ ADD PHONE NUMBER

EMAIL

****@***.**.** | HOME ▼ | ⊗
****@***.**.** | WORK ▼ | ⊗

·RINGTONE

VIBRATION

X  X  X

Y  Y  Y

Z  Z  Z

O  O  O

△  △  △

502B

□  □  □

×  ×  ×

L1

501

500

L1

AP4 / AP3

V
U

# FIG.9

| APPLICATION ID | IMAGE DATA | VICINAL AREA COORDINATE DATA | EDGE COORDINATE DATA |
|---|---|---|---|
| ID1 | image_1 | f1=(U,V) | fe1=(U,V) |
| ID2 | image_2 | f2=(U,V) | fe2=(U,V) |
| ID3 | image_3 | f3=(U,V) | fe3=(U,V) |
| ⋮ | ⋮ | ⋮ | ⋮ |

# FIG.10

| AREA AND DIRECTION OF SCROLLING OPERATION | VIBRATION PATTERN |
|---|---|
| CENTRAL AREA (Y AXIS DIRECTION) | P1 |
| CENTRAL AREA (EXCEPT Y AXIS DIRECTION) | P3 |
| VICINAL AREA (DIRECTION SUCH THAT EDGE BECOMES AWAY FROM DISPLAY AREA) | P1 |
| VICINAL AREA (DIRECTION SUCH THAT EDGE BECOMES CLOSER TO DISPLAY AREA) | P2 |
| VICINAL AREA (ANOTHER DIRECTION) | P3 |
| EDGE (DIRECTION SUCH THAT EDGE BECOMES あ AWAY FROM DISPLAY AREA) | P1 |
| EDGE (ANOTHER DIRECTION) | P3 |

# FIG.11

# FIG.12

# FIG.13

EP 3 282 344 A1

# FIG.14

100

120

150, 160

# FIG.15

# FIG.16

EP 3 282 344 A1

# FIG.17

# FIG.18

AMPLITUDE

A1

CLICK FEELING

t21    t22    t23    t

STOPPING    SCROLLING    STOPPING

EP 3 282 344 A1

# FIG.19

<u>100</u>

# FIG.20

CLICK FEELING

CLICK FEELING

CLICK FEELING

CLICK
FEELING

CLICK FEELING

CLICK FEELING

A1

AMPLITUDE

t31    t32    t33    t

STOPPING    SCROLLING    STOPPING

# FIG.21

START

S21 SCROLLING OPERATION? — NO

YES

S22 SCROLLABLE DIRECTION? — NO

YES

S23 TURN ON VIBRATING ELEMENT

S24 TURN ON/OFF VIBRATING ELEMENT

S25 MANIPULATION INPUT IS PRESENT? — YES

NO

S26 TURN OFF VIBRATING ELEMENT

END

# FIG.22

100A

160A    120    110A

110B

130    170  150    110C    130

Z

X    Y

121    140

# FIG.23

100B

160B1

160B2

# FIG.24

160B2

130    120    140    130

150    170    110A    110

Z
X ●→Y

# FIG.25

100C

130    120C    140    130

150    160    170    110A    110

Z
X ●→Y

## INTERNATIONAL SEARCH REPORT

International application No.

PCT/JP2015/061095

### A. CLASSIFICATION OF SUBJECT MATTER
*G06F3/041(2006.01)i, G06F3/0485(2013.01)i*

According to International Patent Classification (IPC) or to both national classification and IPC

### B. FIELDS SEARCHED

Minimum documentation searched (classification system followed by classification symbols)
G06F3/041, G06F3/0485

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2015 |
| Kokai Jitsuyo Shinan Koho | 1971-2015 | Toroku Jitsuyo Shinan Koho | 1994-2015 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2013-164700 A (Samsung Electronics Co., Ltd.), 22 August 2013 (22.08.2013), paragraphs [0016] to [0025], [0050]; fig. 2, 11 (Family: none) | 1-13 |
| Y | WO 2015/045063 A1 (Fujitsu Ltd.), 02 April 2015 (02.04.2015), paragraphs [0014] to [0039], [0056], [0128], [0129] (Family: none) | 1-13 |

☒ Further documents are listed in the continuation of Box C.  ☐ See patent family annex.

| | |
|---|---|
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search <br> 26 May 2015 (26.05.15) | Date of mailing of the international search report <br> 02 June 2015 (02.06.15) |
|---|---|
| Name and mailing address of the ISA/ <br> Japan Patent Office <br> 3-4-3,Kasumigaseki,Chiyoda-ku, <br> Tokyo 100-8915,Japan | Authorized officer <br><br> Telephone No. |

Form PCT/ISA/210 (second sheet) (July 2009)

**INTERNATIONAL SEARCH REPORT**

International application No.

PCT/JP2015/061095

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2013-3651 A (Sony Computer Entertainment Inc.), 07 January 2013 (07.01.2013), paragraph [0036] & US 2012/0317513 A1 & EP 2535798 A1 & CN 102830899 A & KR 10-2012-0138659 A | 4-6,9,11 |

Form PCT/ISA/210 (continuation of second sheet) (July 2009)

**EP 3 282 344 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014112357 A